# EUROPEAN PATENT APPLICATION

(11) **EP 4 842 081 A1**
(43) Date of publication of application: **18.11.2026**
(21) Application number: 25751260.8
(22) Date of filing: 22.01.2025
(51) Int. Cl.: H04W 52/02

(54) **ENERGY-SAVING METHOD AND RELATED APPARATUS**

(30) Priority: 08.02.2024 CN 202410178309
(71) Applicant: Huawei Technologies Co., Ltd., Shenzhen, Guangdong 518129 (CN)
(72) Inventor: HAN, Feng, Shenzhen, Guangdong 518129 (CN); WANG, Rui, Shenzhen, Guangdong 518129 (CN); LIU, Heng, Shenzhen, Guangdong 518129 (CN); MA, Chuan, Shenzhen, Guangdong 518129 (CN); YANG, Xudong, Shenzhen, Guangdong 518129 (CN)
(74) Representative: Pfenning, Meinig & Partner mbB
(86) International application number: PCT/CN2025/074085
(87) International publication number: WO 2025/167658

(57) **Abstract**

An energy-saving method and a related apparatus are provided. The method includes: obtaining first information indicating a state in which an SSB is not broadcast for an SCell; and performing energy-saving processing for the SCell based on the first information. After the first information indicating the state in which the SSB is not broadcast for the SCell is obtained, any measurement and/or data transmission of the SCell is omitted, stopped, or suspended. This reduces energy consumption of a terminal device and helps reduce network energy consumption.

## Description

This application claims priority to Chinese Patent Application No. 202410178309.3, filed with the China National Intellectual Property Administration on February 8, 2024 and entitled "ENERGY-SAVING METHOD AND RELATED APPARATUS", which is incorporated herein by reference in its entirety.

### TECHNICAL FIELD

This application relates to the field of wireless communication, and in particular, to an energy-saving method and a related apparatus.

### BACKGROUND

Network energy saving is crucial for environmental sustainability, reducing environmental impact (such as greenhouse gas emissions), and lowering operating expenses. With the popularization of 5th generation mobile communication technologies (5th generation mobile communication technologies, 5G) in various industries and geographical areas, more advanced services and applications with extremely high data rates (for example, extended reality (extended reality, XR)) are often required. This makes networks denser and requires more antennas, larger bandwidth, and additional frequency bands. Therefore, the environmental impact of 5G needs to be controlled, and innovative solutions need to be developed to enhance network energy saving.

In related technologies, a base station indicates, to a terminal device via radio resource control (radio resource control, RRC) dedicated signaling, that a system information block 1 (system information block 1, SIB1) of a secondary cell (secondary cell, SCell) includes synchronization signal block (synchronization signal block, SSB) information. Beam broadcast information of the secondary cell is periodically broadcast. The SSB information includes a beam periodicity and a beam time-domain position (SSBinBurst). This process results in high energy consumption in wireless access.

### SUMMARY

This application provides an energy-saving method and a related apparatus, to reduce network energy consumption in wireless access.

According to a first aspect, this application provides an energy-saving method. The method may be performed by a terminal device, may be performed by a component (for example, a chip or a chip system) configured in a terminal device, or may be implemented by a logical module or software that can implement all or some of functions of a terminal device. This is not limited in this application.

Optionally, the method includes: obtaining first information, where the first information indicates a state in which an SSB is not broadcast for an SCell; and performing energy-saving processing for the SCell based on the first information.

For example, obtaining the first information may also be described as receiving the first information.

For example, the state in which the SSB is not broadcast for the SCell may also be described as that the SCell is in a state in which the SSB is not broadcast.

In the foregoing technical solution, after obtaining the first information indicating the state in which the SSB is not broadcast for the SCell, the terminal device does not perform or stops any measurement and/or data transmission of the SCell. This reduces energy consumption of the terminal device, and helps reduce network energy consumption.

With reference to the first aspect, in some possible implementations of the first aspect, in the state in which the SSB is not broadcast for the SCell, the SCell does not send the SSB.

For example, that the SCell does not send the SSB may also be described as that the SCell stops sending the SSB.

It may be understood that when the SCell does not send the SSB, a network device is in a sleep state, so that system energy saving of the SCell of the network device can be implemented.

With reference to the first aspect, in some possible implementations of the first aspect, the energy-saving processing for the SCell includes at least one of the following processing manners: if layer 3 radio resource management (radio resource management, RRM) measurement of the SCell is configured, skipping performing or stopping the layer 3 RRM measurement of the SCell; if beam failure detection of the SCell is configured, skipping performing or stopping the beam failure detection (beam failure detection, BFD) measurement of the SCell; or if channel state information reporting of the SCell is configured, skipping performing or stopping the channel state information (channel state information, CSI) detection and reporting of the SCell.

For example, a layer 3 may also be described as L3, or may be described as an RRC layer.

Optionally, the layer 3 RRM measurement of the SCell, the BFD of the SCell, and the CSI reporting of the SCell are configured via an RRC reconfiguration message.

For example, the RRC reconfiguration message may also be described as RRC reconfiguration information.

For example, when the state in which the SSB is not broadcast for the SCell is an initial state, if the layer 3 RRM measurement of the SCell is configured, the layer 3 RRM measurement of the SCell is omitted; if the BFD of the SCell is configured, the BFD measurement of the SCell is omitted; or if the CSI reporting of the SCell is configured, the CSI detection and reporting of the SCell are omitted.

For example, when the state in which the SSB is not broadcast for the SCell is not an initial state, that is, when a state in which the SSB is broadcast for the SCell is changed to the state in which the SSB is not broadcast for the SCell, if the layer 3 RRM measurement of the SCell is configured, the layer 3 RRM measurement of the SCell is stopped or suspended; if BFD of the SCell is configured, the BFD measurement of the SCell is stopped or suspended; or if the CSI reporting of the SCell is configured, the CSI detection and reporting of the SCell are stopped or suspended.

In the foregoing technical solution, in the state in which the SSB on the SCell is not broadcast, the terminal device does not perform related measurement, which reduces energy consumption of the terminal device. In addition, the terminal device does not report an unnecessary serving cell measurement result.

With reference to the first aspect, in some possible implementations of the first aspect, the first information indicates deactivation of the SCell and the state in which the SSB is not broadcast for the SCell.

For example, deactivation of the SCell and the state in which the SSB is not broadcast for the SCell may be carried in a same piece of signaling to save resources.

With reference to the first aspect, in some possible implementations of the first aspect, the method further includes: obtaining second information, where the second information indicates the state in which the SSB is broadcast for the SCell.

In the foregoing technical solution, after obtaining the second information indicating the state in which the SSB is broadcast for the SCell, the terminal device performs measurement and/or data transmission of the SCell. This improves user experience.

With reference to the first aspect, in some possible implementations of the first aspect, in the state in which the SSB is broadcast for the SCell, the SCell sends the SSB.

With reference to the first aspect, in some possible implementations of the first aspect, the second information indicates deactivation of the SCell and the state in which the SSB is broadcast for the SCell, or the second information indicates activation of the SCell and the state in which the SSB is broadcast for the SCell.

For example, , deactivation of the SCell and the state in which the SSB is broadcast for the SCell may be carried in a same piece of signaling to save resources.

Alternatively, activation of the SCell and the state in which the SSB is broadcast for the SCell may be indicated in a same piece of signaling to save resources.

With reference to the first aspect, in some possible implementations of the first aspect, the first information is carried in at least one of the following signaling: RRC signaling, media access control control element (media access control control element, MAC CE) signaling, or downlink control information (downlink control information, DCI) signaling.

With reference to the first aspect, in some possible implementations of the first aspect, the second information is carried in at least one of the following signaling: RRC signaling, MAC CE signaling, or DCI signaling.

For example, the RRC signaling includes an RRC reconfiguration message, and the DCI signaling includes layer 1 signaling.

For example, a layer 1 may also be described as L1, or may be described as a physical layer.

With reference to the first aspect, in some possible implementations of the first aspect, the first information and the second information are carried in a same piece of signaling, and the signaling includes at least one of the following: the RRC signaling, the MAC CE signaling, or the DCI signaling.

In the foregoing technical solution, when the first information and the second information are carried in the same piece of signaling, a resource can be saved.

With reference to the first aspect, in some possible implementations of the first aspect, if the first information is carried in the RRC signaling, the first information is indicated when the SCell is added, or a handover is performed, or an RRC connection is resumed.

It may be understood that, when the first information is indicated when the SCell is added, or the handover is performed, or the RRC connection is resumed, the state in which the SSB is not broadcast for the SCell, as indicated by the first information, may be an initial state of the SCell.

For example, the handover may also be described as a network device handover, and is applicable to a network device dual connectivity or multi-connectivity scenario.

With reference to the first aspect, in some possible implementations of the first aspect, the second information further indicates SSB broadcast information, and the method further includes: searching for the SSB based on the second information, and performing at least one of the following operations: the layer 3 RRM measurement of the SCell; the BFD measurement of the SCell; or the CSI detection and reporting of the SCell.

In the foregoing technical solution, the terminal device can more quickly learn of an SSB broadcast periodicity and a beam broadcast status based on the SSB broadcast information indicated by the second information, and quickly perform data transmission. This improves performance of the terminal device.

Optionally, the second information further indicates a bandwidth part (bandwidth part, BWP) identifier (identity document, ID), and the method further includes: switching to the indicated BWP ID based on the second information.

With reference to the first aspect, in some possible implementations of the first aspect, the SSB broadcast information includes at least one of the following: the SSB broadcast periodicity, an SSB time-domain position, an SSB broadcast periodicity identifier, or an SSB broadcast information identifier.

For example, the SSB time-domain position may also be described as a time-domain position of an SSB transmitted in a half-frame.

With reference to the first aspect, in some possible implementations of the first aspect, a mapping relationship between the SSB broadcast periodicity identifier and the SSB broadcast periodicity is carried in the RRC reconfiguration message.

Alternatively, a mapping relationship between the SSB broadcast information identifier and the SSB broadcast periodicity and the SSB time-domain position is carried in the RRC reconfiguration message.

With reference to the first aspect, in some possible implementations of the first aspect, obtaining the second information includes: obtaining the second information in response to sending an uplink random access sequence, where the uplink random access sequence is used to request the second information.

For example, in response to sending the uplink random access sequence may also be described as in response to sending a scheduling request.

Optionally, the MAC CE signaling that carries the second information includes random access response signaling.

In the foregoing technical solution, in the state in which the SSB on the SCell is not broadcast, the terminal device may actively send the uplink random access sequence to the network device based on a traffic volume requirement of the terminal device, to obtain the second information indicating the state in which the SSB is broadcast for the SCell, so that the terminal device can quickly detect an SSB signal. This improves user experience while implementing energy saving.

With reference to the first aspect, in some possible implementations of the first aspect, the method further includes: obtaining third information, where the third information is used to configure a random access channel (random access channel, RACH) parameter of the SCell, and the RACH includes a mapping relationship between a RACH resource and the SSB broadcast periodicity.

For example, the third information is carried in the RRC reconfiguration message.

In the foregoing technical solution, the SSB broadcast periodicity can be quickly determined based on the mapping relationship between the RACH resource and the SSB broadcast periodicity. This improves user experience.

According to a second aspect, this application provides an energy-saving method. The method may be performed by a network device, may be performed by a component (for example, a chip or a chip system) configured in a network device, or may be implemented by a logical module or software that can implement all or some of functions of a network device. This is not limited in this application.

Optionally, the method includes: sending first information, where the first information indicates a state in which an SSB is not broadcast for an SCell.

In the foregoing technical solution, in the state in which the SSB is not broadcast for the SCell, the network device is in a sleep state, so that system energy saving of the SCell of the network device is implemented.

With reference to the second aspect, in some possible implementations of the second aspect, in the state in which the SSB is not broadcast for the SCell, the SCell does not send the SSB.

With reference to the second aspect, in some possible implementations of the second aspect, the first information indicates a deactivation of the SCell and the state in which the SSB is not broadcast for the SCell.

With reference to the second aspect, in some possible implementations of the second aspect, the method further includes: sending second information, where the second information indicates a state in which the SSB is broadcast for the SCell.

With reference to the second aspect, in some possible implementations of the second aspect, in the state in which the SSB is broadcast for the SCell, the SCell sends the SSB.

With reference to the second aspect, in some possible implementations of the second aspect, the second information indicates a deactivation of the SCell and the state in which the SSB is broadcast for the SCell, or the second information indicates activation of the SCell and the state in which the SSB is broadcast for the SCell.

With reference to the second aspect, in some possible implementations of the second aspect, the first information is carried in at least one of the following signaling: RRC signaling, media access control control element (media access control control element, MAC CE) signaling, or downlink control information (downlink control information, DCI) signaling.

With reference to the second aspect, in some possible implementations of the second aspect, the second information is carried in at least one of the following signaling: RRC signaling, MAC CE signaling, or DCI signaling.

For example, the RRC signaling includes an RRC reconfiguration message, and the DCI signaling includes layer 1 signaling.

With reference to the second aspect, in some possible implementations of the second aspect, the first information and the second information are carried in a same piece of signaling, and the signaling includes at least one of the following: the RRC signaling, the MAC CE signaling, or the DCI signaling.

With reference to the second aspect, in some possible implementations of the second aspect, if the first information is carried in the RRC signaling, the first information is indicated when the SCell is added, or a handover is performed, or an RRC connection is resumed.

With reference to the second aspect, in some possible implementations of the second aspect, the second information further indicates SSB broadcast information.

Optionally, the second information further indicates a BWP ID.

With reference to the second aspect, in some possible implementations of the second aspect, the SSB broadcast information includes at least one of the following: an SSB broadcast periodicity, an SSB time-domain position, an SSB broadcast periodicity identifier, or an SSB broadcast information identifier.

With reference to the second aspect, in some possible implementations of the second aspect, a mapping relationship between the SSB broadcast periodicity identifier and the SSB broadcast periodicity is carried in an RRC reconfiguration message.

Alternatively, a mapping relationship between the SSB broadcast information identifier and the SSB broadcast periodicity and the SSB time-domain position is carried in the RRC reconfiguration message.

With reference to the second aspect, in some possible implementations of the second aspect, sending the second information includes: sending the second information in response to receiving an uplink random access sequence, where the uplink random access sequence is used to request the second information.

With reference to the second aspect, in some possible implementations of the second aspect, the method further includes: sending third information, where the third information is used to configure a random access channel parameter of the SCell, and the random access channel parameter includes a mapping relationship between a random access channel resource and the synchronization signal block broadcast periodicity.

Optionally, the third information is carried in the RRC reconfiguration message.

According to a third aspect, this application provides a communication system, including: a terminal device configured to perform the method according to any one of the first aspect or the possible implementations of the first aspect and a network device configured to perform the method according to any one of the second aspect or the possible implementations of the second aspect.

According to a fourth aspect, this application provides a communication apparatus. The communication apparatus may implement the method according to any one of the first aspect and the possible implementations of the first aspect, and may implement the method according to any one of the second aspect and the possible implementations of the second aspect. The apparatus includes corresponding units configured to perform the foregoing methods. The unit included in the apparatus may be implemented by using software and/or hardware.

According to a fifth aspect, this application provides a communication apparatus. The apparatus includes a processor. The processor is coupled to a memory, and may be configured to execute a computer program in the memory, to implement the method according to any one of the first aspect and the possible implementations of the first aspect, or implement the method according to any one of the second aspect and the possible implementations of the second aspect.

Optionally, the apparatus further includes a communication interface, and the processor is coupled to the communication interface. The communication interface is configured to receive a signal from a communication apparatus other than the apparatus and transmit the signal to the processor, or send a signal from the processor to a communication apparatus other than the apparatus. For example, the communication interface may be a transceiver, a circuit, a bus, a module, or a communication interface of another type.

Optionally, the apparatus further includes the memory, and the processor is coupled to the memory. The memory is configured to store program instructions and data.

According to a sixth aspect, this application provides a computer-readable storage medium. The computer storage medium stores a computer program or instructions. When the computer program or the instructions are run on a computer, the method in any one of the first aspect and the possible implementations of the first aspect is performed, and the method in any one of the second aspect and the possible implementations of the second aspect is performed.

According to a seventh aspect, this application provides a computer program product. The computer program product includes a computer program (which may also be referred to as code or instructions). When the computer program is run, the method in any one of the first aspect and the possible implementations of the first aspect is performed, or the method in any one of the second aspect and the possible implementations of the second aspect is performed.

According to an eighth aspect, this application provides a chip system. The chip system includes at least one processor, configured to support implementation of a function in any one of the first aspect and the possible implementations of the first aspect, or configured to support implementation of a function in any one of the second aspect and the possible implementations of the second aspect, for example, receiving or processing data in the foregoing method.

In a possible design, the chip system further includes a memory. The memory is configured to store program instructions and data. The memory is located inside the processor or outside the processor.

The chip system may include a chip, or may include a chip and another discrete component.

It should be understood that technical solutions of the third aspect to the eighth aspect of this application correspond to the technical solutions of the first aspect and the second aspect of this application, and beneficial effects achieved by the aspects and corresponding feasible implementations are similar. Details are not described again.

### BRIEF DESCRIPTION OF DRAWINGS

FIG. 1 is a diagram of an architecture of a communication system applicable to an energy-saving method provided in this application;
FIG. 2 is a schematic flowchart of an energy-saving method according to an embodiment of this application;
FIG. 3 is a schematic flowchart of an energy-saving method according to another embodiment of this application;
FIG. 4 is a schematic flowchart of an energy-saving method according to another embodiment of this application;
FIG. 5 is a diagram of MAC CE signaling according to an embodiment of this application;
FIG. 6 is a diagram of another MAC CE signaling according to an embodiment of this application;
FIG. 7 is a diagram of another MAC CE signaling according to an embodiment of this application;
FIG. 8 is a diagram of another MAC CE signaling according to an embodiment of this application;
FIG. 9 is a diagram of another MAC CE signaling according to an embodiment of this application;
FIG. 10 is a diagram of a DCI signaling format according to an embodiment of this application;
FIG. 11 is a flowchart of an energy-saving method according to another embodiment of this application;
FIG. 12 is a diagram of another MAC CE signaling according to an embodiment of this application;
FIG. 13A and FIG. 13B are a diagram of another MAC CE signaling according to an embodiment of this application;
FIG. 14 is a diagram of another DCI signaling format according to an embodiment of this application;
FIG. 15 is a diagram of activating SSB broadcasting via a UL WUS according to an embodiment of this application;
FIG. 16 is another diagram of activating SSB broadcasting via a UL WUS according to an embodiment of this application;
FIG. 17 is a flowchart of an energy-saving method according to another embodiment of this application;
FIG. 18 is a diagram of another MAC CE signaling according to an embodiment of this application;
FIG. 19 is a diagram of another MAC CE signaling according to an embodiment of this application;
FIG. 20 is a block diagram of a communication apparatus according to an embodiment of this application;
FIG. 21 is another block diagram of a communication apparatus according to an embodiment of this application;
FIG. 22 is a diagram of a structure of a terminal device according to an embodiment of this application; and
FIG. 23 is a diagram of a structure of a network device according to an embodiment of this application.

### DESCRIPTION OF EMBODIMENTS

The following describes technical solutions of this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, and a 5th generation (5th generation, 5G) mobile communication system or a new radio access technology (new radio access technology, NR). The 5G mobile communication system may include non-standalone (non-standalone, NSA) networking and/or standalone (standalone, SA) networking.

The technical solutions provided in this application may be further applied to machine-type communication (machine-type communication, MTC), long term evolution-machine (long term evolution-machine, LTE-M), a device-to-device (device-to-device, D2D) network, a machine-to-machine (machine-to-machine, M2M) network, the internet of things (internet of things, IoT) network, or another network. The IoT network may include, for example, the internet of vehicles. Communication modes in an internet of vehicles system are collectively referred to as a vehicle-to-X (vehicle-to-X, V2X, where X may represent anything) system. For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The technical solutions provided in this application may be further applied to a future communication system, for example, a 6th generation (6th Generation, 6G) mobile communication system. This is not limited in this application.

Currently, energy consumption has become an important part of operators' operating expense (operating expense, OPEX). Based on a global system for mobile communications association (global system for mobile communications association, GSMA) report, energy costs of mobile networks account for about 23% of operators' total costs. Most of the energy consumption comes from radio access networks, especially active antenna units (active antenna units, AAUs). Data centers and fiber optic transmission have a small share. Power consumption of wireless access may be divided into two parts: a dynamic part and a static part. The dynamic part is consumed only when data transmission or reception is being performed, and the static part continues to be consumed to maintain a necessary operation of a radio access device, even when data transmission or reception is omitted. To save energy for base stations, currently researched technologies are classified into a time domain technology, a frequency domain technology, a space domain technology, and a power domain technology. For example, main objectives of the time domain and frequency domain technologies are to reduce power consumption of a dynamic part by attempting to switch off a plurality of SCells on one or more carriers to implement micro sleep of the base station; and even to reduce power consumption of a static power part by extending an interval between consecutive active sending or receiving moments to implement light sleep or deep sleep of the base station. The space domain and power domain technologies are mainly to reduce power consumption of a carrier frequency chain and a power amplifier by attempting to shut down more spatial antennas and/or reducing transmit power or power spectral density or improving power amplifier efficiency.

In related technologies, high network energy consumption is mainly reflected in that a common control signal/channel is always broadcast, for example, an SSB is continuously sent. Based on the foregoing problem, embodiments of this application provide an energy-saving method, and a main inventive idea of the method is as follows:

An SSB is broadcast as required for an SCell, a network device indicates, to a terminal device, a state in which the SSB is not broadcast for the SCell, and the network device does not broadcast the SSB in the SCell, and enters an energy-saving state, thereby implementing system energy saving of the SCell of the network device. In addition, the terminal device does not perform serving cell measurement. This reduces energy consumption of the terminal device, and helps reduce network energy consumption.

To better understand embodiments of this application, the following first briefly describes terms in embodiments of this application.
1. Carrier aggregation (carrier aggregation, CA): A terminal device may simultaneously use a plurality of cells (carriers) for uplink and downlink communication, to support high-speed data transmission. Among the plurality of cells, one cell is a primary cell (primary cell, PCell), and the other cells are SCells.

Reconfiguration, addition, and removal of the SCells can be performed by RRC. At intra-new radio (new radio, NR) handover and during connection resume from RRC_INACTIVE, a network device can also add, delete, keep, or reconfigure SCells for usage with a target PCell. When a new SCell is added, dedicated RRC signaling is used for sending all required system information of the SCell, that is, while in a connected mode, terminal devices need not acquire broadcast system information directly from the SCells.

An added SCell is inactive by default. When an SCell in a deactivated state changes to an activated state is determined by a next-generation NodeB (next-generation NodeB, gNodeB). For example, when a traffic volume to be transmitted by a terminal device is large, the gNodeB activates the SCell. For another example, the gNodeB sets a deactivation timer for each SCell. A deactivation timer starts when each SCell is activated. If no control or service data is detected for the SCell within running duration of the timer, the SCell is automatically deactivated. For another example, the gNodeB may configure the added SCell to be in the activated state.

2. Connected-mode measurement: In a mobile communication system, a network device delivers a measurement configuration, and a terminal device performs measurement based on the measurement configuration, and determines whether to trigger measurement report reporting. If the terminal device determines to trigger the measurement report reporting, the terminal device reports a measurement report to the network device, and the network device performs mobility decision, carrier management, or the like based on the measurement report reported by the terminal device.

Specifically, the measurement configuration includes the following related parameters:
(1) Measurement object (measObject): The measurement object mainly includes an object that is measured by the terminal device, and mainly includes an SSB frequency, an SSB subcarrier spacing, a measurement timing configuration (SSB measurement timing configuration, SMTC), an allowlist cell, and a blocklist cell.
(2) Report configuration (reportConfig): The report configuration mainly includes configurations and the like that are related to a measurement event and measurement report triggering. An NR measurement report is based on an SSB measurement result. Each report configuration has a unique identifier (reportConfigId), and reporting is divided into event triggered reporting and periodically triggered reporting based on types. For example, a measurement event A3, that is, neighbour becomes offset better than PCell (Neighbour becomes offset better than PCell), and a related offset value are configured.
(3) Measurement identifier (identity document, ID): The measurement identifier corresponds to one measurement object and one report configuration. That is, a measurement task is generated by combining the measurement object and the report configuration. The terminal device measures, based on a measurement ID and a report configuration requirement, a measurement object associated with the measurement ID. When the terminal device sends a measurement report to a base station, after the terminal device indicates the measurement ID, the base station may find the corresponding measurement object and report configuration based on the measurement ID. Generally, the base station configures a measurement event A6 to measure the SCell. After configuring the SCell, the terminal device measures signal quality of a cell on a same frequency as the SCell. If there is a cell with better signal quality than the current SCell, the terminal device replaces the current SCell with the cell with better signal quality, that is, first deletes the original SCell, and then configures the intra-frequency cell with better signal quality as a new SCell. Alternatively, the base station may configure a measurement event A2 to measure the SCell, and the terminal device periodically measures signal quality of the SCell. If the signal quality is lower than a specified threshold, the SCell is removed.

3. Beam failure detection: For the beam failure detection, the gNB configures the terminal device with beam failure detection reference signals (SSB or channel state information-reference signal (channel state information reference signal, CSI-RS)), and the terminal device declares a beam failure when a quantity of beam failure instance indications from a physical layer reaches a configured threshold before a configured timer expires. After the beam failure is detected on an SCell, the UE triggers beam failure recovery by initiating a transmission of a beam failure recovery (beam failure recovery, BFR) MAC CE for this SCell; and selects an appropriate beam (if available) for this SCell and indicates the beam along with information about the beam failure in the BFR MAC CE.

The network device may configure the following parameters for the terminal device via an RRC reconfiguration message, to perform an SCell beam failure detection and recovery procedure: beamFailureInstanceMaxCount (each serving cell) used for beam failure detection and beamFailureDetectionTimer (each serving cell) used for beam failure detection. Specifically, beamFailureDetectionTimer is a timer for beam failure detection. A value in a number of "Qout, link recovery (link recovery, LR) reporting periods of beam failure detection" reference signal. The beamFailureInstanceMaxCount field determines a quantity of beam failure events after which the UE triggers beam failure recovery. For example, a value n1 corresponds to one beam failure instance, a value n2 corresponds to two beam failure instances, and the rest may be deduced by analogy.

The following describes in detail the energy-saving method provided in this application with reference to the accompanying drawings.

For ease of understanding, the following points are first described.

First, in this application, an indication includes an explicit indication (also referred to as a direct indication) and an implicit indication (also referred to as an indirect indication). Explicitly indicating information A refers to including the information A. Implicitly indicating information A refers to indicating the information A by using a correspondence between the information A and information B and directly indicating the information B, where the correspondence between the information A and the information B may be predefined, prestored, pre-burned, or preconfigured; or indicating the information A by using the information B and a preset rule.

Second, in this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Third, in this application, prefixes such as "first" and "second" are merely intended to distinguish and describe different things belonging to a same name category, and are not intended to constrain a sequence, sizes, or a quantity of things. For example, "first information" and "second information" are merely different information, and have no time sequence relationship, magnitude relationship, or priority relationship.

Fourth, "sending" and "receiving" in this application indicate signal transmission directions. For example, "sending information to a terminal" may be understood as a destination of the information being the terminal, and may include direct sending through an air interface or indirect sending by another unit or module through an air interface. "Receiving information from a network device" may be understood as a source of the information being the network device, and may include direct receiving from the network device through an air interface, or indirect receiving from the network device from another unit or module through an air interface. The "sending" may be understood as "outputting" of a chip interface, and the "receiving" may be understood as "inputting" of chip interface.

In other words, sending and receiving may be performed between devices, for example, between a terminal and a network device. Alternatively, sending and receiving may be performed inside a device, for example, sending or receiving are performed between components, modules, chips, software modules, or hardware modules inside the device through a bus, a cable, or an interface.

Fifth, in embodiments of this application, both "when" and "if" mean that an apparatus performs corresponding processing in an objective situation, are not intended to limit time, do not require the apparatus to necessarily have a determining action during implementation, and do not mean another limitation.

Sixth, in this application, the term like "example", "such as", or "for example" represents giving an example, an illustration, or a description. Any embodiment or design scheme described as "example", "such as", or "for example" in this application should not be explained as being more preferred or having more advantages than another embodiment or design scheme. Exactly, use of the term like "example", "such as", or "for example" is intended to present a related concept in a specific manner.

The following describes in detail a communication system provided in embodiments of this application.

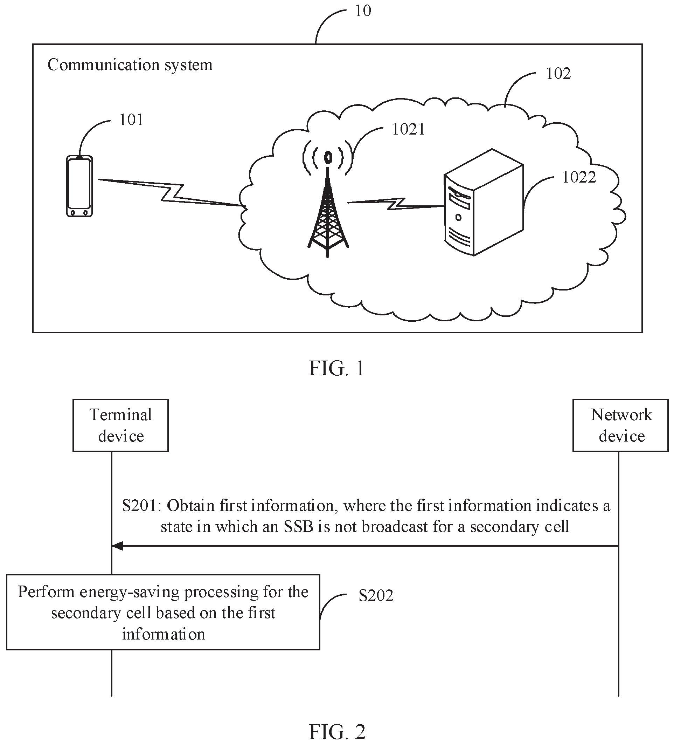

FIG. 1 is a diagram of an architecture of a communication system applicable to the energy-saving method provided in this application. FIG. 1 is a diagram of a possible and nonlimiting system architecture. As shown in FIG. 1, the communication system 10 includes a terminal device 101 and a network device 102, and the terminal device 101 communicates with the network device 102 in a wireless manner.

The terminal device 101 in embodiments of this application may also be referred to as a terminal, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart home, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like.

The network device 102 in embodiments of this application includes a radio access network (radio access network, RAN) device 1021 and a core network (core network) device 1022. Specifically, the radio access network device is connected to the terminal device in a wireless manner, and the radio access network device is connected to the core network device in a wireless or wired manner. The core network device and the radio access network device may be different physical devices, or may be a same physical device that integrates a logical function of a core network and a logical function of a radio access network.

The radio access network device (which may be referred to as an "access network device" for short below) may be any device having a wireless transceiver function. The radio access network device may be a device that accesses a network by using a 3rd generation partnership project (3rd generation partnership project, 3GPP) technology, for example, including but not limited to a base station (base station), a NodeB (NodeB or NB), an evolved NodeB (evolved NodeB, eNB) in LTE, a gNB or a transmission reception point (transmission reception point, TRP) in a 5G (for example, NR) system, a next-generation base station in a 6th generation (6th generation, 6G) mobile communication system, and a base station in a future mobile communication system. The radio access network device may alternatively be a module or unit that completes a part of functions of the base station, for example, may be a central unit (central unit, CU), or may be a distributed unit (distributed unit, DU). The radio access network device may alternatively be a macro base station, a micro base station, a pico base station, a small cell, a balloon station, an indoor station, a relay station, a wireless relay node, a wireless backhaul node, or the like. The radio access network device may alternatively be a device that accesses a network by using a non-3GPP technology, for example, including but not limited to an access point (access point, AP) in a wireless fidelity (wireless fidelity, Wi-Fi) system. It may be understood that all or some of functions of the radio access network device in this application may alternatively be implemented by using a software function running on hardware, or may be implemented by using a virtualization function instantiated on a platform (for example, a cloud platform). A specific form of the radio access network device is not limited in this application.

The core network device includes a user plane function (user plane function, UPF) network element, an access and mobility management function (access and mobility management function, AMF) network element, a session management function (session management function, SMF) network element, a policy control function (policy control function, PCF) network element, and the like. The UPF network element is mainly responsible for transmission of user data; and the other network elements may be referred to as control plane function network elements, and are mainly responsible for authentication, authorization, registration management, session management, mobility management, policy control, and the like, to ensure reliable and stable transmission of the user data.

In embodiments of this application, the terminal device and the network device may be hardware devices, or may be software functions running on dedicated hardware, or software functions running on general-purpose hardware, for example, the virtualization function instantiated on the platform (for example, the cloud platform), or an entity including a dedicated or general-purpose hardware device and a software function. Specific forms of the terminal and the network device are not limited in this application.

It should be noted that the communication system in embodiments of this application may be applied to a CA scenario, may be applied to a dual connectivity (dual connectivity, DC) scenario, or may be applied to a standalone (standalone, SA) networking scenario.

Specific embodiments are used below to describe in detail the technical solutions shown in this application. It should be noted that the following several embodiments may exist independently or may be combined with each other. For same or similar content, for example, explanation and description of a term or a noun and explanation and description of a step, refer to each other in different embodiments. Details are not repeatedly described.

FIG. 2 is a schematic flowchart of an energy-saving method according to an embodiment of this application. As shown in FIG. 2, the energy-saving method provided in this embodiment of this application includes the following steps.

S201: A network device sends first information, and correspondingly, a terminal device obtains the first information, where the first information indicates a state in which an SSB is not broadcast for an SCell.

It may be understood that before sending the first information, the network device needs to first determine the first information.

Optionally, the network device determines the first information when detecting that energy saving needs to be performed.

Specifically, when detecting that the load is light or a quantity of terminal devices in a connected mode is small, the network device determines the first information, that is, the network device determines to disable an SSB of any SCell, so that the SSB on the SCell enters a state in which the SSB is not broadcast.

For example, sending the first information may also be described as indicating the first information or transmitting the first information, and obtaining the first information may also be described as receiving the first information.

Specifically, this may be described as follows: The terminal device obtains the first information sent by the network device. This may alternatively be described as follows: the terminal device receives the first information sent by the network device; the terminal device obtains the first information indicated by the network device; the terminal device receives the first information indicated by the network device; the terminal device obtains the first information transmitted by the network device; or the terminal device receives the first information transmitted by the network device.

For example, the state in which the SSB is not broadcast for the SCell may also be described as that the SCell is in a state in which the SSB is not broadcast.

Optionally, in the state in which the SSB is not broadcast for the SCell, the SCell does not send the SSB.

For example, that the SCell does not send the SSB may also be described as that the SCell stops sending the SSB.

For example, the state in which the SSB is not broadcast may be represented as SSB-less or non-SSB.

For example, the state in which the SSB is not broadcast for the SCell may be represented as that SCell is in an SSB-less state or SCell is in a non-SSB state.

For example, that the SCell does not send the SSB may also be described as that the SCell does not send the SSB in an initial state.

For example, the state in which the SSB is not broadcast may be that the SCell is deactivated and the SSB is not broadcast for the SCell.

For example, the state in which the SSB is not broadcast may alternatively be that the SCell is activated and the SSB is not broadcast for the SCell.

Optionally, the first information indicates a deactivation of the SCell and the state in which the SSB is not broadcast for the SCell.

Optionally, the first information further indicates activation of the SCell and the state in which the SSB is not broadcast for the SCell.

Optionally, the first information is carried in at least one of RRC signaling, MAC CE signaling, or DCI signaling.

It may be understood that the first information may be carried in any one of the foregoing signaling, or may be simultaneously carried in at least two pieces of signaling.

For example, , deactivation of the SCell and the state in which the SSB is not broadcast for the SCell may be carried in a same piece of signaling to save resources; or may be carried in different signaling.

For example, activation of the SCell and the state in which the SSB is not broadcast for the SCell may be carried in a same piece of signaling to save resources; or may be carried in different signaling.

It may be understood that information indicating activation or deactivation of the SCell and information indicating a state in which the SSB is broadcast or the state in which the SSB is not broadcast may be carried in a same piece of signaling, or may be carried in different signaling. In embodiments of this application, an example in which the information indicating activation or deactivation of the SCell and the information indicating the state in which the SSB is broadcast or the state in which the SSB is not broadcast are carried in the same piece of signaling is used for description.

It should be noted that, in the energy-saving method provided in this embodiment of this application, an activated state and a deactivated state of the SCell are not limited. Only a state of the SSB on the SCell needs to be set as required.

For example, the state in which the SSB is not broadcast for the SCell may be an initial state of the SCell, or may be obtained by updating the state of the SSB on the SCell, that is, updating the state in which the SSB is broadcast for the SCell to the state in which the SSB of the SCell is not broadcast.

The state in which the SSB is broadcast for the SCell may be a state in which the SCell is activated and the SSB is broadcast, or may be a state in which the SCell is deactivated and the SSB is broadcast.

Optionally, if the first information is carried in the RRC signaling, and the first information is sent when the SCell is added, when a handover is performed, or when an RRC connection is resumed, the state in which the SSB is not broadcast for the SCell, as indicated by the first information, may be an initial state of the SSB on the SCell. Correspondingly, the SCell may be in the deactivated state.

S202: The terminal device performs energy-saving processing for the SCell based on the first information.

Specifically, after receiving the first information that is sent by the network device and that indicates the state in which the SSB is not broadcast for the SCell, the terminal device does not perform, stops, or suspends measurement of a serving cell, namely, the SCell, or does not perform, stops, or suspends measurement result reporting of a serving cell, namely, the SCell.

For example, after receiving the first information that is sent by the network device and that indicates the state in which the SSB is not broadcast for the SCell, the terminal device does not perform, stops, or suspends serving cell measurement object (ServingCellMO) measurement or measurement result reporting.

Optionally, the energy-saving processing manner of the SCell may include one or more of the following: if layer 3 RRM measurement of the SCell is configured, skipping performing or stopping the layer 3 RRM measurement of the SCell or the measurement result reporting; if BFD of the SCell is configured, skipping performing or stopping the BFD measurement of the SCell; or if CSI reporting of the SCell is configured, skipping performing or stopping the CSI detection and reporting of the SCell.

For example, the CSI reporting includes periodic reporting, semi-persistent reporting, or aperiodic reporting.

For example, a layer 3 may also be described as L3, or may be described as an RRC layer.

Optionally, the energy-saving processing manner of the SCell may alternatively be one or more of the following: if the layer 3 RRM measurement of the SCell is configured, suspending the layer 3 RRM measurement of the SCell or the measurement result reporting; if the BFD of the SCell is configured, suspending the BFD measurement of the SCell; or if the CSI reporting of the SCell is configured, suspending the CSI detection and reporting of the SCell.

It should be noted that, if the state in which the SSB is not broadcast for the SCell, as indicated by the first information, is the initial state of the SSB on the SCell, it indicates that the terminal device has omitted measurement that is of a serving cell and that has been configured, and after obtaining the first information sent by the network device, the terminal device does not perform the corresponding measurement that is of the serving cell and that has been configured. If the state in which the SSB is not broadcast for the SCell, as indicated by the first information, is not the initial state of the SSB on the SCell, it indicates that the terminal device is performing the measurement that is of the serving cell and that has been configured, and after obtaining the first information sent by the network device, the terminal device stops or suspends the corresponding measurement that is of the serving cell and that has been configured.

Specifically, "stop" indicates that current measurement data or a current measurement result is not saved, and measurement of the serving cell is restarted subsequently based on obtained indication information; and "suspend" indicates that the current measurement data or the current measurement result is reserved, and measurement of the serving cell may be continued subsequently based on obtained indication information.

In this embodiment of this application, after obtaining the first information that is sent by the network device and that indicates the state in which the SSB is not broadcast for the SCell, the terminal device does not perform or stops any measurement and/or data transmission of the SCell. This reduces energy consumption of the terminal device, and helps reduce network energy consumption. In addition, in the state in which the SSB is not broadcast for the SCell, the network device is in a sleep state, so that system energy saving of the SCell of the network device is implemented.

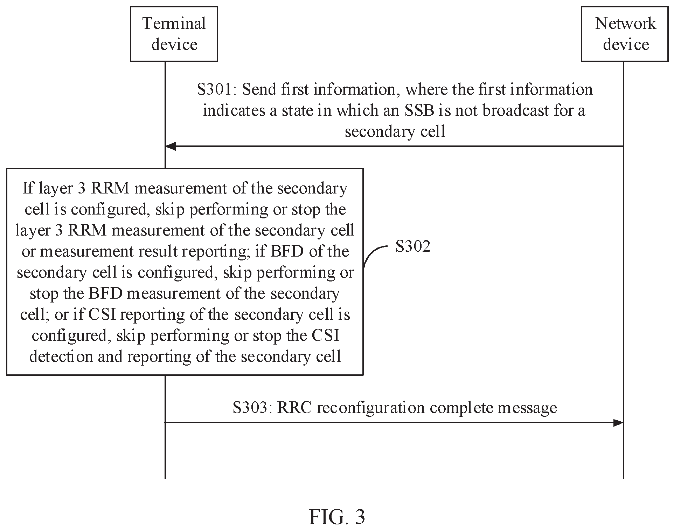

With reference to FIG. 3, the following describes in detail an implementation of the energy-saving method in a case in which the first information is carried in the RRC signaling.

FIG. 3 is a schematic flowchart of an energy-saving method according to another embodiment of this application. As shown in FIG. 3, the energy-saving method includes the following steps.

S301: A network device sends first information, and correspondingly, a terminal device obtains the first information, where the first information indicates a state in which an SSB is not broadcast for an SCell.

For example, sending the first information may also be described as indicating the first information or transmitting the first information, and obtaining the first information may also be described as receiving the first information.

For example, the network device may send the first information via the SCell, or may send the first information via a PCell or another SCell. A quantity of SCells is not limited in embodiments of this application. A specific quantity of SCells is determined based on an actual requirement.

For example, after stopping broadcasting the SSB on the SCell, the network device sends the first information; or after sending the first information, the network device stops broadcasting the SSB on the SCell.

It should be noted that, in the energy-saving method provided in this embodiment of this application, a sequence of stopping broadcasting the SSB on the SCell and sending the first information by the network device is not limited.

Optionally, the state in which the SSB is not broadcast for the SCell may also be described as that the SCell is in a state in which the SSB is not broadcast.

Optionally, in the state in which the SSB is not broadcast for the SCell, the SCell does not send the SSB, which may also be described as that the SCell stops sending the SSB.

For example, the state in which the SSB is not broadcast for the SCell may be that the SCell is deactivated and the SSB is not broadcast.

For example, the state in which the SSB is not broadcast for the SCell may alternatively be that the SCell is activated and the SSB is not broadcast.

Optionally, the first information indicates a deactivation of the SCell and the state in which the SSB is not broadcast for the SCell.

Optionally, the first information further indicates activation of the SCell and the state in which the SSB is not broadcast for the SCell.

Optionally, the first information is carried in RRC signaling.

Optionally, the RRC signaling includes an RRC reconfiguration message.

For example, the RRC reconfiguration message may also be described as RRC reconfiguration information.

Specifically, the network device indicates, in the RRC reconfiguration message to the terminal device, the state in which the SSB is not broadcast for the SCell.

Optionally, the state in which the SSB is not broadcast may be an initial state, or may be obtained by updating a state in which the SSB is broadcast.

For example, that the SCell does not send the SSB may also be described as that the SCell does not send the SSB in the initial state.

In a possible implementation, the state in which the SSB is not broadcast, which corresponds to the first information indicated when the network device adds the SCell, performs a handover, or resumes an RRC connection may be the initial state, and the handover may be a handover of the terminal device.

In another possible implementation, the network device may update a state of the SSB via the RRC reconfiguration message, that is, indicate the first information to the terminal device, so that the SSB on the SCell is updated from the state in which the SSB is broadcast to the state in which the SSB is not broadcast.

For example, an indication of the state of the SSB on the SCell in the RRC reconfiguration message may include at least one of the following implementations:

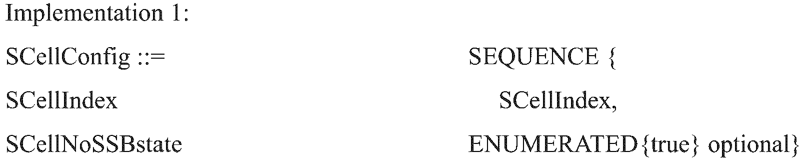

SEQUENCE{...} indicates that all parameters enumerated later may be included, and ENUMERATED{...} indicates that one of the parameters enumerated later is selected.

Specifically, when the parameter in SEQUENCE{...} includes SCellNoSSBstate, and the parameter in ENUMERATED{...} is true, it indicates that the indication of the state of the SSB on the SCell in the RRC reconfiguration message is the state in which the SSB is not broadcast for the SCell.

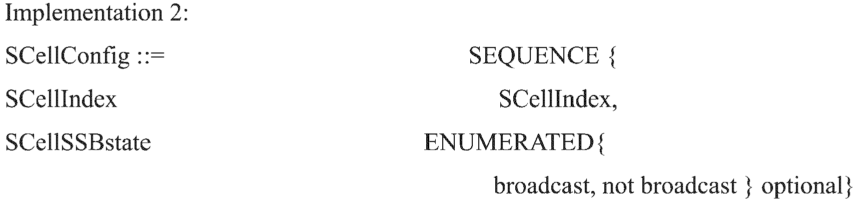

SEQUENCE{...} indicates that all parameters enumerated later may be included, and ENUMERATED{...} indicates that one of the parameters enumerated later is selected.

Specifically, when the parameter in SEQUENCE{...} includes SCellSSBstate; and the parameter in ENUMERATED{...} is broadcast, it indicates that the indication of the state of the SSB on the SCell in the RRC reconfiguration message is the state in which the SSB is broadcast for the SCell; or when the parameter in ENUMERATED{...} is not broadcast, it indicates that the indication of the state of the SSB on the SCell in the RRC reconfiguration message is the state in which the SSB is not broadcast for the SCell.

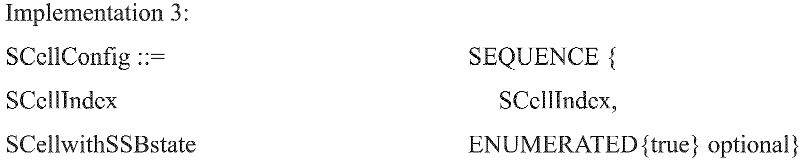

SEQUENCE{...} indicates that all parameters enumerated later may be included, and ENUMERATED{...} indicates that one of the parameters enumerated later is selected.

Specifically, when the parameter in SEQUENCE{...} includes SCellwithSSBstate, and the parameter in ENUMERATED{...} is true, it indicates that the indication of the state of the SSB on the SCell in the RRC reconfiguration message is the state in which the SSB is broadcast for the SCell.

It may be understood that the foregoing implementations are merely a part of examples. In the energy-saving method provided in this embodiment of this application, an implementation of indicating, via the RRC signaling, the state in which the SSB is not broadcast for the SCell is not limited.

It may be understood that the RRC signaling may also indicate the state in which the SSB is broadcast for the SCell.

Optionally, the first information and the second information may be carried in the same piece of RRC signaling, to indicate the state in which the SSB is not broadcast for the SCell and/or the state in which the SSB is broadcast for the SCell.

S302: If layer 3 RRM measurement of the SCell is configured, skip performing or stop the layer 3 RRM measurement of the SCell or the measurement result reporting; if BFD of the SCell is configured, skip performing or stop the BFD measurement of the SCell; or if CSI reporting of the SCell is configured, skip performing or stop the CSI detection and reporting of the SCell.

For example, the CSI reporting includes periodic reporting, semi-persistent reporting, or aperiodic reporting.

It may be understood that when the network device indicates, to the terminal device, the state in which the SSB is not broadcast for the SCell, the terminal device does not perform the measurement of a serving cell, namely, the SCell, or does not perform, stops, or suspends measurement result reporting of a serving cell, namely, the SCell.

For example, after receiving the first information that is sent by the network device and that indicates the state in which the SSB is not broadcast for the SCell, the terminal device does not perform, stops, or suspends serving cell measurement object (ServingCellMO) measurement, or the measurement result reporting.

Specifically, measurement of the serving cell may be determined based on a measurement parameter preconfigured for the serving cell.

For example, when the state in which the SSB is not broadcast for the SCell, as indicated by the RRC signaling, is the initial state, if the layer 3 RRM measurement of the SCell is configured, the layer 3 RRM measurement of the SCell or the measurement result reporting is omitted; if the BFD of the SCell is configured, the BFD measurement of the SCell is omitted; or if the CSI reporting of the SCell is configured, the CSI detection and reporting of the SCell are omitted.

For example, when the state in which the SSB is not broadcast for the SCell, as indicated by the RRC signaling, is updated from the state in which the SSB is broadcast, if the layer 3 RRM measurement of the SCell is configured, the layer 3 RRM measurement of the SCell or the measurement result reporting is stopped or suspended; if the BFD of the SCell is configured, the BFD measurement of the SCell is stopped or suspended; or if the CSI reporting of the SCell is configured, the CSI detection and reporting of the SCell are stopped or suspended.

Specifically, meanings indicated by "stop" and "suspend" are similar to those described above. Details are not described herein again.

S303: The terminal device sends an RRC reconfiguration complete message, and correspondingly, the network device receives the RRC reconfiguration complete message.

Specifically, that the terminal device sends the RRC reconfiguration complete message may be that the terminal device sends the RRC reconfiguration complete message to the network device after completing a corresponding operation based on the RRC reconfiguration message.

For example, the RRC reconfiguration complete message may be represented as RRCReconfigurationcomplete.

In this embodiment of this application, the network device sends, to the terminal device via the RRC signaling, the first information indicating the state in which the SSB is not broadcast for the SCell. After the terminal device obtains the first information, when the layer 3 RRM measurement, beam detection measurement, or L1 measurement of the SCell is configured, the terminal device does not perform the related measurement of the serving cell in the state in which the SSB is not broadcast for the SCell. In addition, the terminal device does not report an unnecessary serving cell measurement result. This reduces energy consumption of the terminal device, and helps reduce network energy consumption.

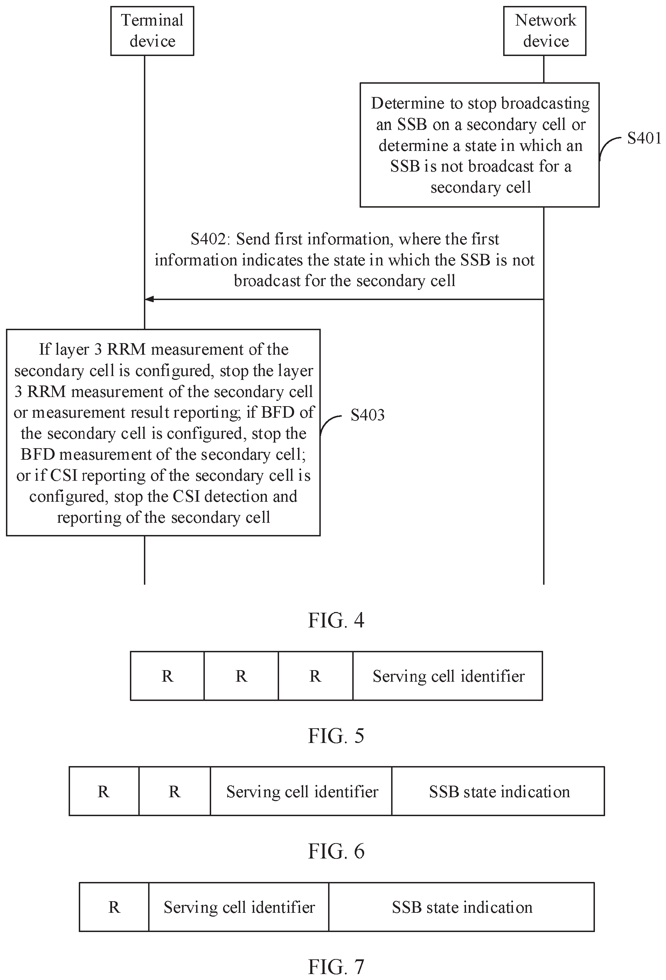

With reference to FIG. 4, the following describes in detail an implementation of the energy-saving method in a case in which the first information is carried in the MAC CE signaling or the DCI signaling.

FIG. 4 is a schematic flowchart of an energy-saving method according to another embodiment of this application. As shown in FIG. 4, the energy-saving method includes the following steps.

S401: A network device determines to stop broadcasting an SSB on an SCell or determines a state in which an SSB is not broadcast for an SCell.

It may be understood that, after the network device enables the SSB on the SCell and serves a terminal device for a period of time, the network device stops broadcasting the SSB or does not send the SSB, to enter an energy-saving state.

For example, that the network device enables the SSB on the SCell includes activating the SCell and broadcasting the SSB, and deactivating the SCell and broadcasting the SSB.

S402: The network device sends first information, and correspondingly, the terminal device obtains the first information, where the first information indicates the state in which the SSB is not broadcast for the SCell.

For example, sending the first information may also be described as indicating the first information or transmitting the first information, and obtaining the first information may also be described as receiving the first information.

For example, the network device sends the first information via the SCell, or may send the first information via a PCell or another SCell.

For example, after stopping broadcasting the SSB on the SCell, the network device sends the first information; or after sending the first information, the network device stops broadcasting the SSB on the SCell.

It should be noted that, in the energy-saving method provided in this embodiment of this application, a sequence of stopping broadcasting the SSB on the SCell and sending the first information by the network device is not limited.

Optionally, the state in which the SSB is not broadcast for the SCell may also be described as that the SCell is in a state in which the SSB is not broadcast.

Optionally, in the state in which the SSB is not broadcast for the SCell, the SCell does not send the SSB.

For example, the state in which the SSB is not broadcast for the SCell may be that the SCell is deactivated and the SSB is not broadcast.

For example, the state in which the SSB is not broadcast for the SCell may alternatively be that the SCell is activated and the SSB is not broadcast.

Optionally, the first information indicates a deactivation of the SCell and the state in which the SSB is not broadcast for the SCell.

Optionally, the first information further indicates activation of the SCell and the state in which the SSB is not broadcast for the SCell.

Optionally, the first information is carried in MAC CE signaling or DCI signaling.

Optionally, the DCI signaling includes layer 1 signaling.

For example, a layer 1 may also be described as L1, or may be described as a physical layer.

With reference to FIG. 5 to FIG. 9, the following first describes in detail a case in which the first information is carried in the MAC CE signaling.

Optionally, in the MAC CE signaling, a MAC subheader includes a logical channel ID indicating that a MAC control command is an SCell SSB stop command.

It may be understood that the SCell SSB stop command means that the SSB on the SCell is not broadcast.

For example, that the SSB on the SCell is not broadcast may also be described as that the SCell does not send the SSB.

Specifically, the MAC CE signaling may be specifically expressed in one or more manners.

First, one or more expression manners in which the MAC CE signaling indicates only a single serving cell are described.

### Manner 1:

FIG. 5 is a diagram of MAC CE signaling according to an embodiment of this application. As shown in FIG. 5, the MAC CE signaling includes redundant bits R and a serving cell identifier field.

For example, a value of the redundant bit R may be 0.

For example, the serving cell identifier field may be represented as a Serving Cell ID or an SCellIndex.

Specifically, the serving cell identifier field indicates an identifier or an index that is of a serving cell and that is indicated by the MAC CE signaling.

For example, a length of the serving cell identifier field may be 5 bits (bits).

It may be understood that the network device sends, to the terminal device via the MAC CE signaling, the first information indicating the state in which the SSB is not broadcast for the SCell, so that the terminal device performs energy-saving processing on the serving cell based on the identifier or index that is of the serving cell and that is indicated by the MAC CE signaling. Specifically, an energy-saving processing manner is similar to the foregoing manner. Details are not described herein again.

It should be noted that, in the energy-saving method provided in this embodiment of this application, the length of the serving cell identifier field in the MAC CE signaling is not limited, and a specific length may be determined based on an actual requirement.

### Manner 2:

FIG. 6 is a diagram of another MAC CE signaling according to an embodiment of this application. As shown in FIG. 6, the MAC CE signaling includes redundant bits R, a serving cell identifier field, and an SSB state indication field.

For example, a value of the redundant bit R may be 0.

For example, the serving cell identifier field may be represented as a Serving Cell ID or an SCellIndex.

For example, the SSB state indication field includes an indication field indicating the state in which the SSB is not broadcast, and/or an indication field indicating a state in which the SSB is broadcast.

For example, the SSB state indication field may be represented as an SSBstate indicator, the indication field indicating the state in which the SSB is not broadcast may be represented as an SSB-less indicator, and the indication field indicating the state in which the SSB is broadcast may be represented as an SSB indicator.

Specifically, the serving cell identifier field indicates an identifier or an index that is of a serving cell and that is indicated by the MAC CE signaling.

For example, a length of the serving cell identifier field may be 5 bits.

Optionally, the SSB state indication field in the MAC CE signaling shown in FIG. 6 indicates the state in which the SCell is deactivated and the SSB is not broadcast, a state in which the SCell is deactivated and the SSB is broadcast, the state in which the SCell is activated and the SSB is not broadcast, or a state in which the SCell is activated and the SSB is broadcast.

It should be noted that, the SSB state indication field in the MAC CE signaling indicates, via a single bit, the state in which the SSB is not broadcast for the SCell or the state in which the SSB is broadcast for the SCell.

Specifically, when a value of a bit corresponding to the SSB state indication field is 1, it indicates that the SCell broadcasts the SSB; or when a value of a bit corresponding to the cell SSB state indication field is 0, it indicates that the SCell does not broadcast the SSB.

Correspondingly, alternatively, when a value of a bit corresponding to the SSB state indication field is 0, it indicates that the SCell broadcasts the SSB; or when a value of a bit corresponding to the cell SSB state indication field is 1, it indicates that the SCell does not broadcast the SSB.

Optionally, the state in which the SSB is not broadcast for the SCell may be that the SCell is deactivated and the SSB is not broadcast, or may be that the SCell is activated and the SSB is not broadcast. The state in which the SSB is broadcast for the SCell may be that the SCell is deactivated and the SSB is broadcast, or may be that the SCell is activated and the SSB is broadcast.

Specifically, when the value of the bit corresponding to the SSB state indication field is 0, it indicates the state in which the SCell is deactivated and the SSB is broadcast or the state in which the SCell is activated and the SSB is broadcast, that is, the SCell is deactivated or activated. In this state, the network device continues to broadcast the SSB on the SCell, and correspondingly, the terminal device performs serving cell measurement. When the value of the bit corresponding to the SSB state indication field is 1, it indicates the state in which the SCell is deactivated and the SSB is not broadcast, or the state in which the SCell is activated and the SSB is not broadcast, that is, the SCell is deactivated or activated. In this state, the network device stops broadcasting the SSB on the SCell, and correspondingly, the terminal device does not perform serving cell measurement.

Correspondingly, alternatively, when the value of the bit corresponding to the SSB state indication field is 1, it indicates the state in which the SCell is deactivated and the SSB is not broadcast, or the state in which the SCell is activated and the SSB is not broadcast, that is, the SCell is deactivated or activated. In this state, the network device stops broadcasting the SSB on the SCell, and correspondingly, the terminal device does not perform serving cell measurement. When the value of the bit corresponding to the SSB state indication field is 0, it indicates the state in which the SCell is deactivated and the SSB is broadcast or the state in which the SCell is activated and the SSB is broadcast, that is, the SCell is deactivated or activated. In this state, the network device continues to broadcast the SSB on the SCell, and correspondingly, the terminal device performs serving cell measurement.

For example, continuing to broadcast the SSB on the SCell may also be described as continuing to send the SSB on the SCell. Correspondingly, stopping broadcasting the SSB on the SCell may also be described as stopping sending the SSB on the SCell.

### Manner 3:

FIG. 7 is a diagram of another MAC CE signaling according to an embodiment of this application. As shown in FIG. 7, the MAC CE signaling includes a redundant bit R, a serving cell identifier field, and an SSB state indication field.

For example, a value of the redundant bit R may be 0.

For example, the serving cell identifier field may be represented as a Serving Cell ID or an SCellIndex.

For example, the SSB state indication field includes an indication field indicating the state in which the SSB is not broadcast, and/or an indication field indicating a state in which the SSB is broadcast.

For example, the SSB state indication field may be represented as an SSB state indicator, the indication field indicating the state in which the SSB is not broadcast may be represented as an SSB-less indicator, and the indication field indicating the state in which the SSB is broadcast may be represented as an SSB indicator.

Specifically, the serving cell identifier field indicates an identifier or an index that is of a serving cell and that is indicated by the MAC CE signaling.

For example, a length of the serving cell identifier field may be 5 bits.

Optionally, the SSB state indication field in the MAC CE signaling shown in FIG. 7 indicates the state in which the SCell is deactivated and the SSB is not broadcast, a state in which the SCell is deactivated and the SSB is broadcast, a state in which the SCell is activated and the SSB is broadcast, or the state in which the SCell is activated and the SSB is not broadcast.

It should be noted that, the SSB state indication field in the MAC CE signaling indicates, via 2 bits, the state in which the SCell is deactivated and the SSB is not broadcast, the state in which the SCell is deactivated and the SSB is broadcast, the state in which the SCell is activated and the SSB is broadcast, or the state in which the SCell is activated and the SSB is not broadcast.

Specifically, when a value of a bit corresponding to the SSB state indication field is 00, it indicates the state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the SSB state indication field is 01, it indicates the state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the SSB state indication field is 10, it indicates the state in which the SCell is activated and the SSB is broadcast, that is, the SCell is activated. In this state, the network device continues to broadcast the SSB on the SCell, and correspondingly, the terminal device performs serving cell measurement. When a value of a bit corresponding to the SSB state indication field is 11, it indicates the state in which the SCell is activated and the SSB is not broadcast, that is, the SCell is activated. In this state, the network device does not broadcast the SSB on the SCell, and correspondingly, the terminal device does not perform serving cell measurement.

Correspondingly, alternatively, when a value of a bit corresponding to the SSB state indication field is 01, it indicates the state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the indication field indicating the state in which the SSB is not broadcast is 10, it indicates the state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the SSB state indication field is 11, it indicates the state in which the SCell is activated and the SSB is broadcast, that is, the SCell is activated. In this state, the network device continues to broadcast the SSB on the SCell, and the terminal device performs serving cell measurement. When a value of a bit corresponding to the SSB state indication field is 00, it indicates the state in which the SCell is activated and the SSB is not broadcast, that is, the SCell is activated. In this state, the network device does not broadcast the SSB on the SCell, and correspondingly, the terminal device does not perform serving cell measurement.

Correspondingly, alternatively, when a value of a bit corresponding to the SSB state indication field is 10, it indicates the state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the SSB state indication field is 11, it indicates the state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the SSB state indication field is 00, it indicates the state in which the SCell is activated and the SSB is broadcast, that is, the SCell is activated. In this state, the network device continues to broadcast the SSB on the SCell, and correspondingly, the terminal device performs serving cell measurement. When a value of a bit corresponding to the SSB state indication field is 01, it indicates the state in which the SCell is activated and the SSB is not broadcast, that is, the SCell is activated. In this state, the network device does not broadcast the SSB on the SCell, and correspondingly, the terminal device does not perform serving cell measurement.

Correspondingly, alternatively, when a value of a bit corresponding to the SSB state indication field is 11, it indicates the state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the SSB state indication field is 00, it indicates the state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the SSB state indication field is 01, it indicates the state in which the SCell is activated and the SSB is broadcast, that is, the SCell is activated. In this state, the network device continues to broadcast the SSB on the SCell, and correspondingly, the terminal device performs serving cell measurement. When a value of a bit corresponding to the SSB state indication field is 10, it indicates the state in which the SCell is activated and the SSB is not broadcast, that is, the SCell is activated. In this state, the network device does not broadcast the SSB on the SCell, and correspondingly, the terminal device does not perform serving cell measurement.

For example, continuing to broadcast the SSB on the SCell may also be described as continuing to send the SSB on the SCell. Correspondingly, stopping broadcasting the SSB on the SCell may also be described as stopping sending the SSB on the SCell.

The following describes one or more expression manners in which the MAC CE signaling simultaneously indicates a plurality of serving cells.

### Manner 1:

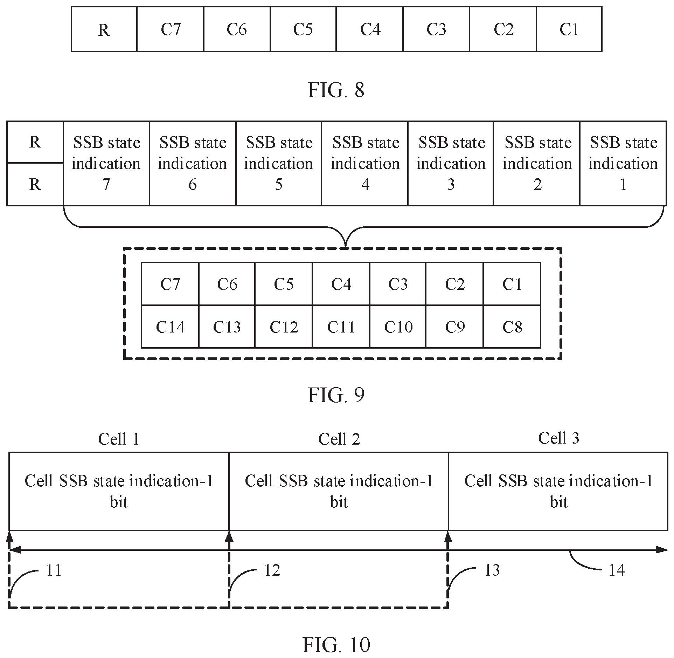

FIG. 8 is a diagram of another MAC CE signaling according to an embodiment of this application. As shown in FIG. 8, the MAC CE signaling includes a redundant bit R and a Ci field.

For example, a value of the redundant bit R may be 0.

Optionally, the Ci field indicates a state of an SSB of an SCell whose SCell index SCellIndex is i.

It should be noted that an SSB state indication field in the MAC CE signaling indicates, via a single bit, the state of the SSB on the SCell whose SCell index SCellIndex is i.

Specifically, when the Ci field is set to 1, it indicates that the SCell whose SCellIndex is i is deactivated and the SSB is broadcast, or it indicates that the SCell whose SCellIndex is i is activated and the SSB is broadcast; or when the Ci field is set to 0, it indicates that the SCell whose SCellIndex is i is deactivated and the SSB is not broadcast, or it indicates that the SCell whose SCellIndex is i is activated and the SSB is not broadcast.

Correspondingly, alternatively, when the Ci field is set to 0, it indicates that the SCell whose SCellIndex is i is deactivated and the SSB is broadcast, or it indicates that the SCell whose SCellIndex is i is activated and the SSB is broadcast; or when the Ci field is set to 1, it indicates that the SCell whose SCellIndex is i is deactivated and the SSB is not broadcast, or it indicates that the SCell whose SCellIndex is i is activated and the SSB is not broadcast.

For example, broadcasting the SSB may also be described as sending the SSB, and correspondingly, not broadcasting the SSB may also be described as not sending the SSB or stopping sending the SSB.

It should be noted that, when SCelli is not configured as the state of the SSB in RRC signaling of the network device, the terminal device may ignore the Ci bit.

### Manner 2:

FIG. 9 is a diagram of another MAC CE signaling according to an embodiment of this application. As shown in FIG. 9, the MAC CE signaling includes redundant bits R and SSB state indication fields of a plurality of serving cells. The SSB state indication is represented via 2 bits, as shown in a dashed box in the figure. Specifically, values of bits corresponding to C1 to C14 may be 0 or 1.

For example, a value of the redundant bit R may be 0.

For example, the SSB state indication field includes an indication field indicating the state in which the SSB is not broadcast, and/or an indication field indicating a state in which the SSB is broadcast.

In some embodiments, the SSB state indication field includes the indication field indicating the state in which the SSB is not broadcast. In some embodiments, the SSB state indication field includes the indication field indicating the state in which the SSB is broadcast. In some embodiments, the SSB state indication field includes the indication field indicating the state in which the SSB is not broadcast and the indication field indicating the state in which the SSB is broadcast.

For example, the SSB state indication fields of the plurality of serving cells each may be represented as an SSBstate indicator, the indication field indicating the state in which the SSB is not broadcast may be represented as an SSB-less indicator, and the indication field indicating the state in which the SSB is broadcast may be represented as an SSB indicator.

Optionally, the SSB state indication fields of the plurality of serving cells indicate the state of the SSB on the SCell whose SCell index SCellIndex is i.

It should be noted that, the SSB state indication fields of the plurality of SCells in the MAC CE signaling indicate, via 2 bits, the state of the SSB on the SCell whose SCell index SCellIndex is i.

Specifically, when a value of a bit corresponding to the SSB state indication field is 00, it indicates a state in which the SCell whose SCellIndex is i is deactivated and the SSB is broadcast, that is, the SCell is deactivated. In this state, the network device continues to broadcast the SSB on the SCell, and correspondingly, the terminal device performs serving cell measurement. When a value of a bit corresponding to the SSB state indication field is 01, it indicates a state in which the SCell whose SCellIndex is i is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the SSB state indication field is 10, it indicates a state in which the SCell whose SCellIndex is i is activated and the SSB is broadcast, that is, the SCell is activated. In this state, the network device continues to broadcast the SSB on the SCell, and correspondingly, the terminal device performs serving cell measurement. When a value of a bit corresponding to the SSB state indication field is 11, it indicates a state in which the SCell whose SCellIndex is i is activated and the SSB is not broadcast, that is, the SCell is activated. In this state, the network device stops broadcasting the SSB on the SCell, and correspondingly, the terminal device does not perform serving cell measurement.

Correspondingly, alternatively, when a value of a bit corresponding to the SSB state indication field is 01, it indicates a state in which the SCell whose SCellIndex is i is deactivated and the SSB is broadcast, that is, the SCell is deactivated. In this state, the network device continues to broadcast the SSB on the SCell, and correspondingly, the terminal device performs serving cell measurement. When a value of a bit corresponding to the SSB state indication field is 10, it indicates a state in which the SCell whose SCellIndex is i is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the SSB state indication field is 11, it indicates a state in which the SCell whose SCellIndex is i is activated and the SSB is broadcast, that is, the SCell is activated. In this state, the network device continues to broadcast the SSB on the SCell, and correspondingly, the terminal device performs serving cell measurement. When a value of a bit corresponding to the SSB state indication field is 00, it indicates a state in which the SCell whose SCellIndex is i is activated and the SSB is not broadcast, that is, the SCell is activated. In this state, the network device stops broadcasting the SSB on the SCell, and correspondingly, the terminal device does not perform serving cell measurement.

Correspondingly, alternatively, when a value of a bit corresponding to the SSB state indication field is 10, it indicates a state in which the SCell whose SCellIndex is i is deactivated and the SSB is broadcast, that is, the SCell is deactivated. In this state, the network device continues to broadcast the SSB on the SCell, and correspondingly, the terminal device performs serving cell measurement. When a value of a bit corresponding to the SSB state indication field is 11, it indicates a state in which the SCell whose SCellIndex is i is deactivated and the SSB is not broadcast, that is, the SCell is deactivated. In this state, the network device stops broadcasting the SSB on the SCell, and correspondingly, the terminal device performs serving cell measurement. When a value of a bit corresponding to the SSB state indication field is 00, it indicates a state in which the SCell whose SCellIndex is i is activated and the SSB is broadcast, that is, the SCell is activated. In this state, the network device continues to broadcast the SSB on the SCell, and correspondingly, the terminal device performs serving cell measurement. When a value of a bit corresponding to the SSB state indication field is 01, it indicates a state in which the SCell whose SCellIndex is i is activated and the SSB is not broadcast, that is, the SCell is activated. In this state, the network device stops broadcasting the SSB on the SCell, and correspondingly, the terminal device does not perform serving cell measurement.

Correspondingly, alternatively, when a value of a bit corresponding to the SSB state indication field is 11, it indicates a state in which the SCell whose SCellIndex is i is deactivated and the SSB is broadcast, that is, the SCell is deactivated. In this state, the network device continues to broadcast the SSB on the SCell, and correspondingly, the terminal device performs serving cell measurement. When a value of a bit corresponding to the SSB state indication field is 00, it indicates a state in which the SCell whose SCellIndex is i is deactivated and the SSB is not broadcast, that is, the SCell is deactivated. In this state, the network device stops broadcasting the SSB on the SCell, and correspondingly, the terminal device performs serving cell measurement. When a value of a bit corresponding to the SSB state indication field is 01, it indicates a state in which the SCell whose SCellIndex is i is activated and the SSB is broadcast, that is, the SCell is activated. In this state, the network device continues to broadcast the SSB on the SCell, and correspondingly, the terminal device performs serving cell measurement. When a value of a bit corresponding to the SSB state indication field is 10, it indicates a state in which the SCell whose SCellIndex is i is activated and the SSB is not broadcast, that is, the SCell is activated. In this state, the network device stops broadcasting the SSB on the SCell, and correspondingly, the terminal device does not perform serving cell measurement.

It may be understood that the MAC CE signaling may also indicate the state in which the SSB is broadcast for the SCell.

Optionally, the first information and the second information may be carried in the same piece of MAC CE signaling, to indicate the state in which the SSB is not broadcast for the SCell and/or the state in which the SSB is broadcast for the SCell.

It should be noted that the foregoing representation manners of the MAC CE signaling are merely a part of examples. In the energy-saving method provided in this embodiment of this application, a representation manner of the MAC CE signaling is not limited. For example, the MAC CE signaling may alternatively be represented in a manner of more than 2 bits, provided that the following states may be represented: the state in which the SCell is deactivated and the SSB is not broadcast, the state in which the SCell is deactivated and the SSB is broadcast, the state in which the SCell is activated and the SSB is broadcast, or the state in which the SCell is activated and the SSB is not broadcast.

The following describes in detail a case in which the first message is carried in the DCI signaling.

Optionally, the network device sends the DCI signaling to the terminal device, where the DCI signaling indicates the state of the SSB on the SCell.

For example, the DCI signaling may be represented as L1 group DCI.

Optionally, the DCI signaling may indicate a single serving cell, or may simultaneously indicate a plurality of serving cells.

Specifically, the DCI signaling may be specifically expressed in one or more manners.

Manner 1: The DCI signaling simultaneously indicates the plurality of serving cells.

It may be understood that the plurality of serving cells may be described as a plurality of serving SCells.

Optionally, in the DCI signaling, one cell SSB state indication is indicated corresponding to each SCell.

Optionally, in the DCI signaling, the cell SSB state indication may be indicated via a single bit, or may be indicated via 2 bits, or may be indicated via more than 2 bits.

For example, the cell SSB state indication field may be represented as a cell SSB state indication.

Specifically, when the cell SSB state indication is indicated via the single bit, a specific expression of the DCI signaling may be as follows:
For example, when a value of a bit corresponding to the cell SSB state indication field is 1, it indicates that the SCell broadcasts the SSB; or when a value of a bit corresponding to the cell SSB state indication field is 0, it indicates that the SCell does not broadcast the SSB.

Correspondingly, alternatively, when a value of a bit corresponding to the cell SSB state indication field is 0, it indicates that the SCell broadcasts the SSB; or when a value of a bit corresponding to the cell SSB state indication field is 0, it indicates that the SCell does not broadcast the SSB.

Optionally, that the SCell broadcasts the SSB may be that the SCell is activated and the SSB is broadcast, or may be that the SCell is deactivated and the SSB is broadcast. That the SCell does not broadcast the SSB may be that the SCell is deactivated and the SSB is not broadcast, or may be that the SCell is activated and the SSB is not broadcast.

Specifically, when the value of the bit corresponding to the cell SSB state indication field is 1, it indicates that the SCell is activated and the SSB is broadcast, or the SCell is deactivated and the SSB is broadcast. In this state, the network device continues to broadcast the SSB on the SCell, and correspondingly, the terminal device performs serving cell measurement. When the value of the bit corresponding to the cell SSB state indication field is 0, it indicates that the SCell is activated and the SSB is not broadcast, or the SCell is deactivated and the SSB is not broadcast. In this state, the network device stops broadcasting the SSB on the SCell, and correspondingly, the terminal device does not perform serving cell measurement.

Correspondingly, alternatively, when the value of the bit corresponding to the cell SSB state indication field is 0, it indicates that the SCell is activated and the SSB is broadcast, or the SCell is deactivated and the SSB is broadcast. In this state, the network device continues to broadcast the SSB on the SCell, and correspondingly, the terminal device performs serving cell measurement. When the value of the bit corresponding to the cell SSB state indication field is 1, it indicates that the SCell is activated and the SSB is not broadcast, or the SCell is deactivated and the SSB is not broadcast. In this state, the network device stops broadcasting the SSB on the SCell, and correspondingly, the terminal device does not perform serving cell measurement.

Specifically, when the cell SSB state indication is indicated via the 2 bits, a specific expression of the DCI signaling may be as follows:
When a value of a bit corresponding to the cell SSB state indication field is 00, it indicates a state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the cell SSB state indication field is 01, it indicates a state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the cell SSB state indication field is 10, it indicates a state in which the SCell is activated and the SSB is broadcast, that is, the SCell is activated. In this state, the network device continues to broadcast the SSB on the SCell, and correspondingly, the terminal device performs serving cell measurement. When a value of a bit corresponding to the cell SSB state indication field is 11, it indicates a state in which the SCell is activated and the SSB is not broadcast, that is, the SCell is activated. In this state, the network device does not broadcast the SSB on the SCell, and correspondingly, the terminal device does not perform serving cell measurement.

Correspondingly, alternatively, when a value of a bit corresponding to the cell SSB state indication field is 01, it indicates a state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the indication field indicating the state in which the cell SSB is not broadcast is 10, it indicates a state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the cell SSB state indication field is 11, it indicates a state in which the SCell is activated and the SSB is broadcast, that is, the SCell is activated. In this state, the network device continues to broadcast the SSB on the SCell, and the terminal device performs serving cell measurement. When a value of a bit corresponding to the cell SSB state indication field is 00, it indicates a state in which the SCell is activated and the SSB is not broadcast, that is, the SCell is activated. In this state, the network device does not broadcast the SSB on the SCell, and correspondingly, the terminal device does not perform serving cell measurement.

Correspondingly, alternatively, when a value of a bit corresponding to the cell SSB state indication field is 10, it indicates a state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the cell SSB state indication field is 11, it indicates a state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the cell SSB state indication field is 00, it indicates a state in which the SCell is activated and the SSB is broadcast, that is, the SCell is activated. In this state, the network device continues to broadcast the SSB on the SCell, and correspondingly, the terminal device performs serving cell measurement. When a value of a bit corresponding to the cell SSB state indication field is 01, it indicates a state in which the SCell is activated and the SSB is not broadcast, that is, the SCell is activated. In this state, the network device does not broadcast the SSB on the SCell, and correspondingly, the terminal device does not perform serving cell measurement.

Correspondingly, alternatively, when a value of a bit corresponding to the cell SSB state indication field is 11, it indicates a state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the cell SSB state indication field is 00, it indicates a state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the cell SSB state indication field is 01, it indicates a state in which the SCell is activated and the SSB is broadcast, that is, the SCell is activated. In this state, the network device continues to broadcast the SSB on the SCell, and correspondingly, the terminal device performs serving cell measurement. When a value of a bit corresponding to the cell SSB state indication field is 10, it indicates a state in which the SCell is activated and the SSB is not broadcast, that is, the SCell is activated. In this state, the network device does not broadcast the SSB on the SCell, and correspondingly, the terminal device does not perform serving cell measurement.

Optionally, the DCI signaling is detected by the terminal device when the network device configures parameters such as a cell SSBState-RNTI, a DCI size, and an SCell position indication in DCI for the terminal device.

Optionally, the parameters such as the cell SSBState-radio network temporary identifier (radio network temporary identifier, RNTI), the DCI size, and the SCell position indication in the DCI are carried in the RRC reconfiguration message.

Optionally, parameters such as a periodicity, an offset, and an aggregation level may be further configured for a search space of the DCI signaling, and the parameters such as the periodicity, the offset, and the aggregation level are carried in the RRC reconfiguration message.

Specifically, the SSBState-RNTI indicates an RNTI value for scrambling cyclic redundancy check (cyclic redundancy check, CRC) of a DCI format, and is used to monitor the DCI signaling, to determine, based on the monitored DCI signaling, whether the SCell broadcasts the SSB.

The DCI size indicates a size of the DCI format.

The SCell position indication in the DCI indicates a bit position corresponding to the SCell in a DCI format information block.

FIG. 10 is a diagram of a DCI signaling format according to an embodiment of this application. As shown in FIG. 10, the DCI signaling format includes a position of an SCell in DCI, a DCI size, and cells.

Specifically, the cells shown in FIG. 10 are respectively a cell 1 (Cell#1), a cell 2 (Cell#2), and a cell 3 (Cell#3), and each SCell occupies 1 bit (bit).

For example, the cell may also be described as an SCell, or may be described as a serving cell.

Specifically, a dashed arrow 11, a dashed arrow 12, and a dashed arrow 13 shown in FIG. 10 respectively indicate bit positions corresponding to the cell 1, the cell 2, and the cell 3 in a DCI format information block.

For example, the dashed arrow 11 indicates a position of the cell 1 starting from a bit 0 and spanning 1 bit, the dashed arrow 12 indicates a position of the cell 2 starting from a bit 1 and spanning 1 bit, and the dashed arrow 13 indicates a position of the cell 3 starting from a bit 2 and spanning 1 bit.

Specifically, a solid double arrow 14 shown in FIG. 10 indicates a size of a DCI format.

It should be noted that in the energy-saving method provided in this embodiment of this application, a quantity of SCells in the DCI signaling format and a quantity of bits occupied by each SCell are not limited. FIG. 10 is merely an example. For example, each SCell may occupy 3 bits or 5 bits. Specifically, the quantity of SCells and the quantity of bits occupied by each SCell may be determined based on an actual requirement.

For example, in the DCI signaling format in this manner, if each SCell occupies 2 bits, a position of a corresponding cell may be obtained by spanning 2 bits from a bit indicated by a dashed arrow (for example, the dashed arrow shown in FIG. 10). Specifically, if an example in which the dashed arrow 11 shown in FIG. 10 indicates starting from the bit 0 is used, the position of the cell 1 may be obtained by spanning 2 bits; if the dashed arrow 12 shown in FIG. 10 indicates starting from the bit 2, the position of the cell 2 may be obtained by spanning 2 bits; and the rest may be deduced by analogy.

Manner 2: The DCI signaling indicates only the single serving cell.

Optionally, in the DCI signaling, an SCell index (SCellIndex) and a cell SSB state indication are indicated.

For example, the cell SSB state indication may be represented as a cell SSB state indication.

Specifically, when a value of a bit corresponding to the cell SSB state indication field is 1, it indicates that the SCell broadcasts the SSB; or when a value of a bit corresponding to the cell SSB state indication field is 0, it indicates that the SCell does not broadcast the SSB.

Correspondingly, alternatively, when a value of a bit corresponding to the cell SSB state indication field is 0, it indicates that the SCell broadcasts the SSB; or when a value of a bit corresponding to the cell SSB state indication field is 0, it indicates that the SCell does not broadcast the SSB.

For example, that the SCell broadcasts the SSB may be that the SCell is activated and the SSB is broadcast, or may be that the SCell is deactivated and the SSB is broadcast. That the SCell does not broadcast the SSB may be that the SCell is deactivated and the SSB is not broadcast, or may be that the SCell is activated and the SSB is not broadcast.

It may be understood that the DCI signaling may also indicate the state in which the SSB is broadcast for the SCell.

Optionally, the first information and the second information may be carried in the same piece of DCI signaling, to indicate the state in which the SSB is not broadcast for the SCell and/or the state in which the SSB is broadcast for the SCell.

It should be noted that the foregoing representation manners of the DCI signaling are merely a part of examples. In the energy-saving method provided in this embodiment of this application, a representation manner of the DCI signaling is not limited, provided that the following states may be represented: the state in which the SCell is deactivated and the SSB is not broadcast, the state in which the SCell is deactivated and the SSB is broadcast, the state in which the SCell is activated and the SSB is broadcast, or the state in which the SCell is activated and the SSB is not broadcast.

S403: If layer 3 RRM measurement of the SCell is configured, stop the layer 3 RRM measurement of the SCell or the measurement result reporting; if BFD of the SCell is configured, stop the BFD measurement of the SCell; or if CSI reporting of the SCell is configured, stop the CSI detection and reporting of the SCell.

For example, the CSI reporting includes periodic reporting, semi-persistent reporting, or aperiodic reporting.

Optionally, if the layer 3 RRM measurement of the SCell is configured, the layer 3 RRM measurement of the SCell or the measurement result reporting is suspended; if the BFD of the SCell is configured, the BFD measurement of the SCell is suspended; or if the CSI reporting of the SCell is configured, the CSI detection and reporting of the SCell are suspended.

In some embodiments, measurement result reporting of a serving cell, namely, the SCell, is stopped or suspended.

Specifically, meanings indicated by "stop" and "suspend" are similar to those described above. Details are not described herein again.

Optionally, if the terminal device has started one or more of an SCell deactivation timer (sCellDeactiveTimer), a bandwidth part deactivation timer (bwp-InactiveTimer), an activated BWP, a configured downlink assignment and any configured uplink grant type 2, any physical uplink shared channel (physical uplink shared channel, PUSCH) resource for a semi-persistent CSI report, any configured uplink grant type 1, a hybrid automatic repeat request (hybrid automatic repeat request, HARQ) buffer, and triggering of a consistent listen before talk (listen before talk, LBT) failure of the SCell that are related to the SCell, the energy-saving processing further includes one or more of the following processing manners:
stopping the SCell-related SCell deactivation timer; stopping the SCell-related bandwidth part deactivation timer; deactivating any SCell-related activated BWP; clearing any configured downlink assignment and any configured uplink grant type 2 that are related to the SCell; clearing any SCell-related PUSCH resource for the semi-persistent CSI report; suspending any SCell-related configured uplink grant type 1; and clearing all SCell-related HARQ buffers and canceling triggering of the consistent LBT failure of the SCell.

In this embodiment of this application, based on a dynamic indication of the dynamic MAC CE signaling or DCI signaling, the terminal device may quickly enter the state in which the SSB is not broadcast, and stop or suspend any measurement and data transmission of the SCell. This reduces energy consumption of the terminal device, and helps reduce network energy consumption. In addition, system energy saving of the SCell of the network device is implemented in the state in which the SSB is not broadcast.

It may be understood that, in an actual requirement, the network device sends indication information to the terminal device when determining, based on a traffic volume on a terminal device side, that the SCell needs to start to broadcast the SSB, to indicate the terminal device that the SCell starts to broadcast the SSB.

With reference to a specific embodiment, the following describes in detail an implementation in which the network device sends the indication information to the terminal device when determining, based on the traffic volume on the terminal device side, that the SCell needs to start to broadcast the SSB, to indicate the terminal device that the SCell starts to broadcast the SSB.

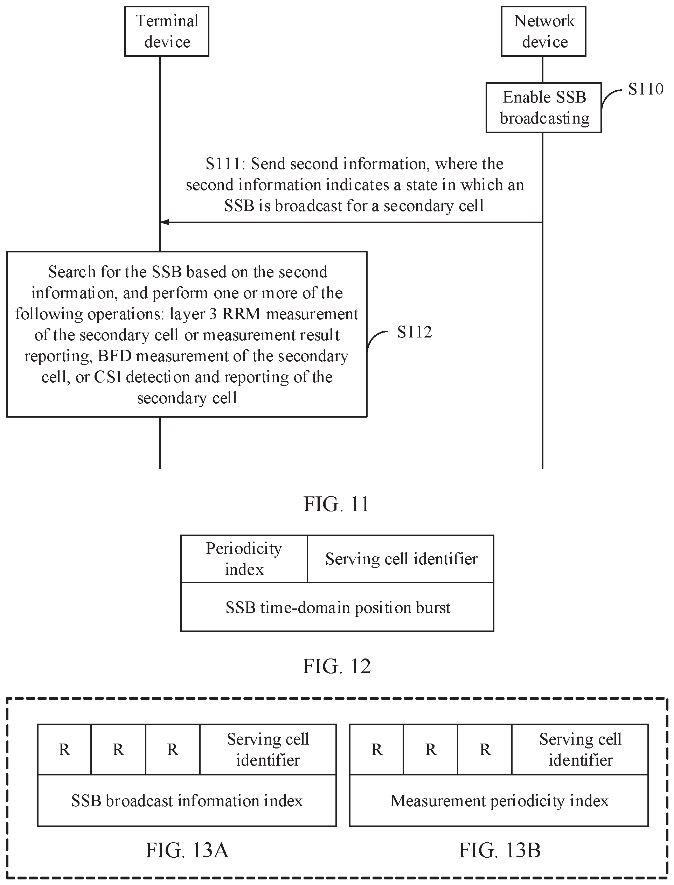

FIG. 11 is a flowchart of an energy-saving method according to another embodiment of this application. As shown in FIG. 11, the energy-saving method includes the following steps.

S110: A network device enables SSB broadcasting.

For example, that the network device enables the SSB on the SCell includes activating the SCell and broadcasting the SSB, and deactivating the SCell and broadcasting the SSB.

S111: The network device sends second information, and correspondingly, a terminal device obtains the second information, where the second information indicates a state in which the SSB is broadcast for the SCell.

For example, sending the second information may also be described as indicating the second information or transmitting the second information, and obtaining the second information may also be described as receiving the second information.

For example, the network device sends the second information via the SCell, or may send the second information via a PCell or another SCell.

For example, after resuming the SSB broadcasting on the SCell, the network device sends the second information; or after sending the second information, the network device resumes the SSB broadcasting on the SCell.

It should be noted that, in the energy-saving method provided in this embodiment of this application, a sequence of resuming the SSB broadcasting on the SCell and sending the second information by the network device is not limited.

Optionally, the state in which the SSB is broadcast for the SCell may also be described as that the SCell is in a state in which the SSB is broadcast.

Optionally, in the state in which the SSB is broadcast for the SCell, the SCell sends the SSB.

Optionally, the state in which the SSB is broadcast for the SCell may also be described as an initial state where the SCell is in the state in which the SSB is broadcast.

For example, the state in which the SSB is broadcast for the SCell may be that the SCell is deactivated and the SSB is broadcast, or that the SCell is activated and the SSB is broadcast.

Optionally, the second information indicates a deactivation of the SCell and the state in which the SSB is broadcast for the SCell, or the second information indicates activation of the SCell and the state in which the SSB is broadcast for the SCell.

Optionally, the second information is carried in at least one of the following signaling: RRC signaling, MAC CE signaling, or DCI signaling.

It may be understood that the second information may be carried in any one of the foregoing signaling, or may be simultaneously carried in at least two pieces of signaling.

Optionally, the RRC signaling includes an RRC reconfiguration message, and the DCI signaling includes layer 1 signaling.

For example, the RRC reconfiguration message may also be described as RRC reconfiguration information.

It should be noted that the first information may also indicate the state in which the SSB is broadcast for the SCell. Based on this scenario, in the energy-saving method provided in this embodiment of this application, first information and the second information may be carried in a same piece of signaling to save resources. For example, the signaling may be the RRC signaling, the MAC CE signaling, or the DCI signaling.

It may be understood that in the energy-saving method provided in this embodiment of this application, the second information may provide a direct indication, or may provide an indirect indication via the first information. In the energy-saving method provided in this embodiment of this application, whether indication information indicating the state in which the SSB is broadcast for the SCell and indication information indicating a state in which the SSB is not broadcast for the SCell are carried in a same piece of signaling is not limited, and is specifically determined based on an actual requirement.

Optionally, when the second information is carried in the MAC CE signaling or the DCI signaling, the second information may further indicate SSB broadcast information.

Optionally, the SSB broadcast information includes at least one of the following: an SSB broadcast periodicity, an SSB time-domain position, an SSB broadcast periodicity identifier, and an SSB broadcast information identifier.

For example, the SSB time-domain position may also be described as a time-domain position of an SSB transmitted in a half-frame.

Optionally, a mapping relationship between the SSB broadcast periodicity identifier and the SSB broadcast periodicity is carried in an RRC reconfiguration message; or a mapping relationship between the SSB broadcast information identifier and the SSB broadcast periodicity and the SSB time-domain position is carried in the RRC reconfiguration message.

It should be noted that, in the mapping relationship between the SSB broadcast information identifier and the SSB broadcast periodicity and the SSB time-domain position is carried in the RRC reconfiguration message, the SSB broadcast information identifier and the SSB broadcast periodicity may be considered as a whole.

Optionally, when the second information is carried in the MAC CE signaling or the DCI signaling, the second information may indicate a measurement periodicity or a measurement periodicity index for the SCell. For example, the measurement periodicity includes sf160, sf256, sf320, sf512, sf640, sf1024, and sf1280. sf160 corresponds to 160 subframes, sf256 corresponds to 256 subframes, and the rest may be deduced by analogy. The measurement periodicity index one-to-one corresponds to the measurement periodicity. The measurement periodicity or measurement periodicity index is used only when the SCell is configured on a frequency indicated by a measurement object measObjectNR.

The following separately describes in detail an implementation in which the second information is carried in the MAC CE signaling and an implementation in which the second information is carried in the DCI signaling.

First, the implementation in which the second information is carried in the MAC CE signaling is described in detail.

Optionally, in the MAC CE signaling, a MAC subheader includes a logical channel ID indicating that a MAC control command is an SCell SSB broadcast command.

Specifically, the MAC CE signaling may be specifically expressed in one or more manners. The following describes in detail one or more expression manners of the MAC CE signaling.

Manner 1: Specifically, this manner is similar to the expression manner corresponding to FIG. 5. Details are not described herein again.

### Manner 2:

FIG. 12 is a diagram of another MAC CE signaling according to an embodiment of this application. As shown in FIG. 12, the MAC CE signaling includes a periodicity index, a serving cell identifier field, and an SSB time-domain position burst field.

For example, the periodicity index may be represented as a Periodicity Index, the serving cell identifier may be represented as a Serving Cell ID or an SCellIndex, and the SSB time-domain position burst may be represented as SSB-positionInBurst.

Optionally, the MAC CE signaling may further include an SCell index (SCellIndex) (the serving cell identifier in FIG. 12 is the SCellindex) and an SSB broadcast periodicity (not shown in FIG. 12).

Specifically, the SSB time-domain position burst indicates a time-domain position of an SSB transmitted in a half-frame. As shown in FIG. 12, in a row of the SSB time-domain position burst, the first bit starting from the leftmost corresponds to a synchronization signal (synchronization signal, SS) or physical broadcast channel (physical broadcast channel, PBCH) block index 0, the second bit corresponds to an SS/PBCH block index 1, and the rest may be deduced by analogy.

In a bitmap bitmap, 0 indicates that a corresponding SS/PBCH block is not sent, and 1 indicates that a corresponding SS/PBCH block has been sent.

Correspondingly, alternatively, in a bitmap bitmap, 0 indicates that a corresponding SS/PBCH block has been sent, and 1 indicates that a corresponding SS/PBCH block is not sent.

For example, that the SS/PBCH block is not sent indicates that the SSB is not broadcast, or the SSB is not sent; and that the SS/PBCH block has been sent indicates that the SSB is broadcast, or the SSB has been sent.

### Manner 3:

FIG. 13A and FIG. 13B are a diagram of another MAC CE signaling according to an embodiment of this application. As shown in FIG. 13A, the MAC CE signaling includes redundant bits R, a serving cell identifier field, and an SSB broadcast information index field.

For example, a value of the redundant bit R may be 0.

For example, the serving cell identifier may be represented as a Serving Cell ID or an SCellIndex, and the SSB broadcast information index may be represented as an SSB-BroadcastInfoIndex.

Specifically, in this manner, the network device indicates, to the terminal device via an RRC reconfiguration message, an SSB broadcast information list or a mapping relationship between SSB broadcast information and an SSB broadcast information ID. In this way, in a process in which the SCell activates the MAC CE signaling, the network device indicates only a corresponding SSB broadcast information index or SSB broadcast information ID.

For example, a format of the RRC reconfiguration message is as follows:

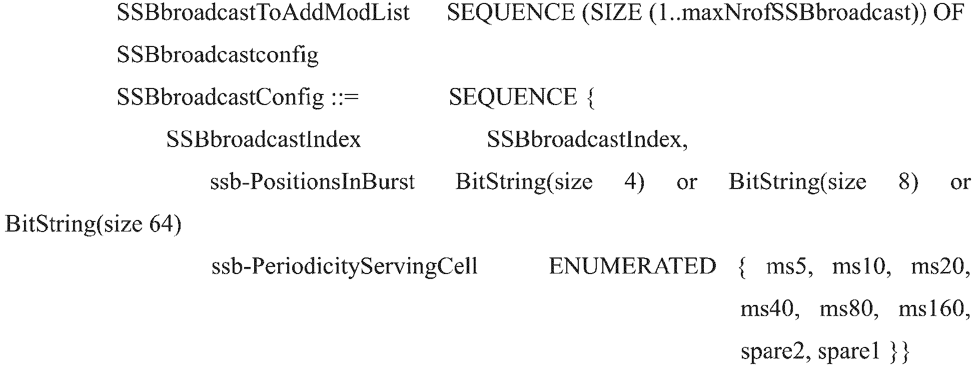

Herein, SSBbroadcastToAddModList indicates that the SSB broadcast information list is added, SSBbroadcastconfig indicates an SSB broadcast information configuration, SEQUENCE{...} indicates that all parameters enumerated later may be included, and ENUMERATED{...} indicates that one of the parameters enumerated later is selected.

Specifically, the parameters in SEQUENCE{...} include an SSB broadcast index (SSBbroadcastIndex), an SSB time-domain position burst (SSB-positionInBurst), and a serving cell SSB periodicity (ssb-PeriodicityServingCell).

A quantity of bits corresponding to the SSB time-domain position burst includes 4 bits, 8 bits, and 64 bits, and one bit corresponds to whether one beam is broadcast. The serving cell SSB periodicity includes 5 ms, 10 ms, 20 ms, 40 ms, 80 ms, 160 ms, spare2, and spare1.

### Manner 4:

FIG. 13A and FIG. 13B are a diagram of another MAC CE signaling according to an embodiment of this application. As shown in FIG. 13B, the MAC CE signaling includes redundant bits R, a serving cell identifier field, and an SCell measurement periodicity index.

Optionally, in this manner, the MAC CE signaling may indicate a measurement periodicity or a measurement periodicity index for the SCell. For example, the measurement periodicity includes sf160, sf256, sf320, sf512, sf640, sf1024, and sf1280. sf160 corresponds to 160 subframes, sf256 corresponds to 256 subframes, and the rest may be deduced by analogy.

The measurement periodicity index one-to-one corresponds to the measurement periodicity.

For example, a value 0 of the index corresponds to sf160, a value 1 of the index corresponds to sf256, and the rest may be deduced by analogy.

Specifically, the measurement periodicity or the measurement periodicity index is used only when the SCell is configured on a frequency indicated by a measurement object measObjectNR.

For example, a format of the RRC reconfiguration message of the network device is as follows:

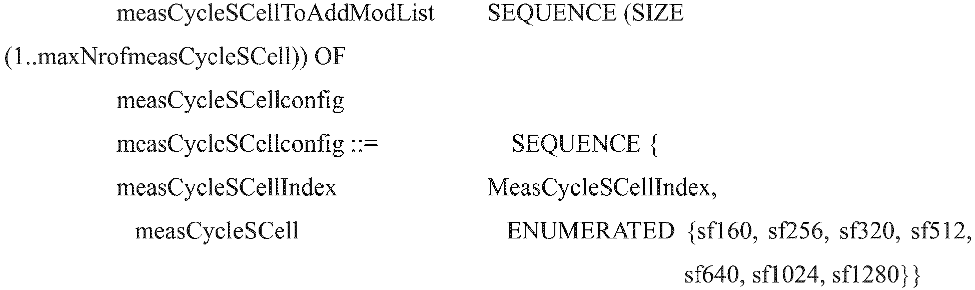

Herein, measCycleSCellToAddModList indicates that an SCell measurement periodicity modification list is added, measCycleSCellconfig indicates an SCell measurement periodicity configuration, SEQUENCE{...} indicates that all parameters enumerated later may be included, and ENUMERATED{...} indicates that one of the parameters enumerated later is selected.

Specifically, the parameters in SEQUENCE{...} include an SCell measurement periodicity index (measCycleSCellIndex) and an SCell measurement periodicity (measCycleSCell).

For example, the measurement periodicity may include sf160, sf256, sf320, sf512, sf640, sf1024, and sf1280.

Optionally, Manner 4 and Manner 2 or Manner 3 may be carried in a same piece of MAC CE signaling.

Manner 5: In this manner, the MAC CE signaling indicates a state in which the SCell is deactivated and the SSB is not broadcast, a state in which the SCell is deactivated and the SSB is broadcast, a state in which the SCell is activated and the SSB is broadcast, or a state in which the SCell is activated and the SSB is not broadcast.

In this manner, an expression manner of the MAC CE signaling is similar to that described in FIG. 7. Details are not described herein again.

The following describes in detail the implementation in which the second information is carried in the DCI signaling.

Optionally, the network device sends the DCI signaling to the terminal device, where the DCI signaling indicates the state in which the SSB is broadcast for the SCell.

For example, the DCI signaling may be represented as L1 group DCI.

Optionally, the DCI signaling may simultaneously indicate a plurality of serving cells.

It may be understood that the plurality of serving cells may be described as a plurality of serving SCells.

Optionally, in the DCI signaling, one cell SSB state indication is indicated corresponding to each SCell.

Optionally, in the DCI signaling, the cell SSB state indication may be indicated via a single bit, or may be indicated via 2 bits, or may be indicated via more than 2 bits.

For example, the cell SSB state indication may be represented as a cell SSB state indication.

Specifically, when the cell SSB state indication is indicated via the single bit, a specific expression of the DCI signaling may be as follows:

When a value of a bit corresponding to the cell SSB state indication field is 1, it indicates that the SCell broadcasts the SSB; or when a value of a bit corresponding to the cell SSB state indication field is 0, it indicates that the SCell does not broadcast the SSB.

Correspondingly, alternatively, when a value of a bit corresponding to the cell SSB state indication field is 0, it indicates that the SCell broadcasts the SSB; or when a value of a bit corresponding to the cell SSB state indication field is 1, it indicates that the SCell does not broadcast the SSB.

For example, that the SCell broadcasts the SSB may be that the SCell is activated and the SSB is broadcast, or may be that the SCell is deactivated and the SSB is broadcast. That the SCell does not broadcast the SSB may be that the SCell is deactivated and the SSB is not broadcast, or may be that the SCell is activated and the SSB is not broadcast.

Specifically, when the value of the bit corresponding to the cell SSB state indication field is 1, it indicates that the SCell is activated and the SSB is broadcast, or the SCell is deactivated and the SSB is broadcast. In this state, the network device continues to broadcast the SSB on the SCell, and correspondingly, the terminal device performs serving cell measurement. When the value of the bit corresponding to the cell SSB state indication field is 0, it indicates that the SCell is activated and the SSB is not broadcast, or the SCell is deactivated and the SSB is not broadcast. In this state, the network device stops broadcasting the SSB on the SCell, and correspondingly, the terminal device does not perform serving cell measurement.

Correspondingly, alternatively, when the value of the bit corresponding to the cell SSB state indication field is 0, it indicates that the SCell is activated and the SSB is broadcast, or the SCell is deactivated and the SSB is broadcast. In this state, the network device continues to broadcast the SSB on the SCell, and correspondingly, the terminal device performs serving cell measurement. When the value of the bit corresponding to the cell SSB state indication field is 1, it indicates that the SCell is activated and the SSB is not broadcast, or the SCell is deactivated and the SSB is not broadcast. In this state, the network device stops broadcasting the SSB on the SCell, and correspondingly, the terminal device does not perform serving cell measurement.

Specifically, when the cell SSB state indication is indicated via the 2 bits, a specific expression of the DCI signaling may be as follows:

When a value of a bit corresponding to the cell SSB state indication field is 00, it indicates the state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the cell SSB state indication field is 01, it indicates the state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the cell SSB state indication field is 10, it indicates the state in which the SCell is activated and the SSB is broadcast, that is, the SCell is activated. In this state, the network device continues to broadcast the SSB on the SCell, and correspondingly, the terminal device performs serving cell measurement. When a value of a bit corresponding to the cell SSB state indication field is 11, it indicates the state in which the SCell is activated and the SSB is not broadcast, that is, the SCell is activated. In this state, the network device does not broadcast the SSB on the SCell, and correspondingly, the terminal device does not perform serving cell measurement.

Correspondingly, alternatively, when a value of a bit corresponding to the cell SSB state indication field is 01, it indicates the state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the indication field indicating the state in which the cell SSB is not broadcast is 10, it indicates the state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the cell SSB state indication field is 11, it indicates the state in which the SCell is activated and the SSB is broadcast, that is, the SCell is activated. In this state, the network device continues to broadcast the SSB on the SCell, and the terminal device performs serving cell measurement. When a value of a bit corresponding to the cell SSB state indication field is 00, it indicates the state in which the SCell is activated and the SSB is not broadcast, that is, the SCell is activated. In this state, the network device does not broadcast the SSB on the SCell, and correspondingly, the terminal device does not perform serving cell measurement.

Correspondingly, alternatively, when a value of a bit corresponding to the cell SSB state indication field is 10, it indicates the state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the cell SSB state indication field is 11, it indicates the state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the cell SSB state indication field is 00, it indicates the state in which the SCell is activated and the SSB is broadcast, that is, the SCell is activated. In this state, the network device continues to broadcast the SSB on the SCell, and correspondingly, the terminal device performs serving cell measurement. When a value of a bit corresponding to the cell SSB state indication field is 01, it indicates the state in which the SCell is activated and the SSB is not broadcast, that is, the SCell is activated. In this state, the network device does not broadcast the SSB on the SCell, and correspondingly, the terminal device does not perform serving cell measurement.

Correspondingly, alternatively, when a value of a bit corresponding to the cell SSB state indication field is 11, it indicates the state in which the SCell is deactivated and the SSB is broadcast, that is, the SCell is deactivated. In this state, the network device continues to broadcast the SSB on the SCell, and correspondingly, the terminal device performs serving cell measurement. When a value of a bit corresponding to the cell SSB state indication field is 00, it indicates the state in which the SCell is deactivated and the SSB is not broadcast, that is, the SCell is deactivated. In this state, the network device stops broadcasting the SSB on the SCell, and correspondingly, the terminal device does not perform serving cell measurement. When a value of a bit corresponding to the cell SSB state indication field is 01, it indicates the state in which the SCell is activated and the SSB is broadcast, that is, the SCell is activated. In this state, the network device continues to broadcast the SSB on the SCell, and correspondingly, the terminal device performs serving cell measurement. When a value of a bit corresponding to the cell SSB state indication field is 10, it indicates the state in which the SCell is activated and the SSB is not broadcast, that is, the SCell is activated. In this state, the network device does not broadcast the SSB on the SCell, and correspondingly, the terminal device does not perform serving cell measurement.

Optionally, the DCI signaling is detected by the terminal device when the network device configures parameters such as a cell SSBState-RNTI, a DCI size, and an SCell position indication in DCI for the terminal device.

Optionally, the parameters such as the cell SSBState-radio network temporary identifier (radio network temporary identifier, RNTI), the DCI size, and the SCell position indication in the DCI are carried in an RRC reconfiguration message.

Optionally, parameters such as a periodicity, an offset, and an aggregation level may be further configured for a search space of the DCI signaling, and the parameters such as the periodicity, the offset, and the aggregation level are carried in the RRC reconfiguration message.

Specifically, the SSBState-RNTI indicates an RNTI value for scrambling cyclic redundancy check (cyclic redundancy check, CRC) of a DCI format, and is used to monitor the DCI signaling, to determine, based on the monitored DCI signaling, whether the SCell broadcasts the SSB.

The DCI size indicates a size of the DCI format.

The SCell position indication in the DCI indicates a bit position corresponding to the SCell in a DCI format information block.

A diagram of a DCI signaling format is similar to that in FIG. 10. Details are not described herein again.

The following describes in detail a manner in which the DCI signaling simultaneously indicates the SSB broadcast information.

Optionally, in the DCI signaling, N-bit cell SSB broadcast information may be additionally indicated corresponding to each SCell. A value of the N-bit cell SSB broadcast information corresponds to an SSB broadcast information index or an SSB broadcast information ID.

For example, N may be any positive integer like 1, 2, or 3.

An example in which a bit corresponding to each SCell is 3 bits (3 bits), in other words, a value of N is 3 is used for description.

Specifically, when the value of the N-bit cell SSB broadcast information corresponds to the SSB broadcast information index, 000 corresponds to SSB broadcast information whose index is 0, 001 corresponds to SSB broadcast information whose index is 1, 010 corresponds to SSB broadcast information whose index is 2, and the rest may be deduced by analogy. Examples are not enumerated herein.

When the value of the N-bit cell SSB broadcast information corresponds to the SSB broadcast information ID, 000 corresponds to SSB broadcast information whose ID is 0, 001 corresponds to SSB broadcast information whose ID is 1, 010 corresponds to SSB broadcast information whose ID is 2, and the rest may be deduced by analogy. Examples are not enumerated herein.

Specifically, in this manner, the network device indicates, to the terminal device via an RRC reconfiguration message, an SSB broadcast information list or a mapping relationship between SSB broadcast information and an SSB broadcast information ID. In this way, in a process in which the SCell activates the MAC CE signaling, the network device indicates only a corresponding SSB broadcast information index or SSB broadcast information ID.

For example, a format of the RRC reconfiguration message is as follows:

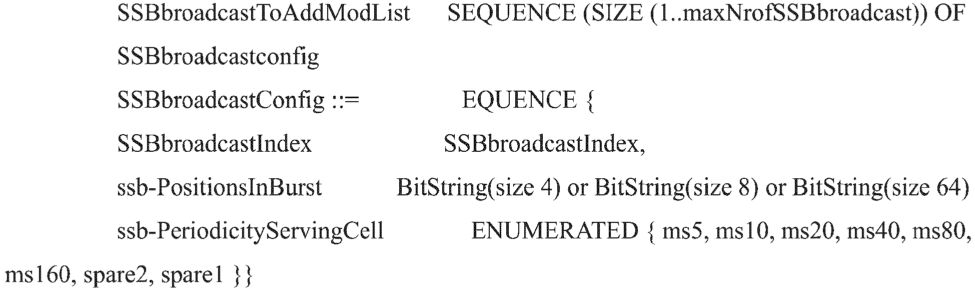

Herein, SSBbroadcastToAddModList indicates that the SSB broadcast information list is added, SSBbroadcastconfig indicates an SSB broadcast information configuration, SEQUENCE{...} indicates that all parameters enumerated later may be included, and ENUMERATED{...} indicates that one of the parameters enumerated later is selected.

Specifically, the parameters in SEQUENCE{...} include an SSB broadcast index (SSBbroadcastIndex), an SSB time-domain position burst (SSB-positionInBurst), and a serving cell SSB periodicity (ssb-PeriodicityServingCell).

A quantity of bits corresponding to the SSB time-domain position burst includes 4 bits, 8 bits, and 64 bits, and one bit corresponds to whether one beam is broadcast. The serving cell SSB periodicity includes 5 ms, 10 ms, 20 ms, 40 ms, 80 ms, 160 ms, spare2, and spare1.

Optionally, in this manner, the DCI signaling may indicate a measurement periodicity or a measurement periodicity index for the SCell. For example, the measurement periodicity includes sf160, sf256, sf320, sf512, sf640, sf1024, and sf1280. sf160 corresponds to 160 subframes, sf256 corresponds to 256 subframes, and the rest may be deduced by analogy.

The measurement periodicity index one-to-one corresponds to the measurement periodicity.

For example, a value 0 of the index corresponds to sf160, a value 1 of the index corresponds to sf256, and the rest may be deduced by analogy.

Specifically, the measurement periodicity or the measurement periodicity index is used only when the SCell is configured on a frequency indicated by a measurement object measObjectNR.

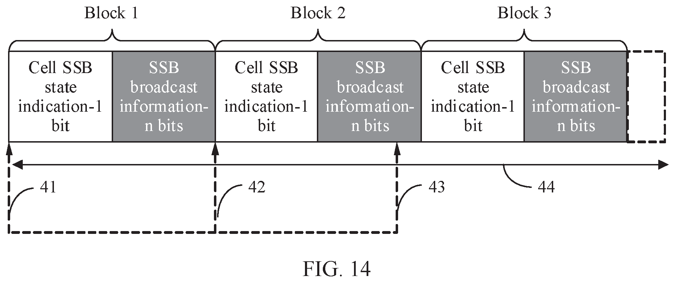

FIG. 14 is a diagram of another DCI signaling format according to an embodiment of this application. As shown in FIG. 14, the DCI signaling format includes a position of an SCell in DCI, a DCI size, and cell identities.

Specifically, the cell identities shown in FIG. 14 are respectively a block 1 (Block#1), a block 2 (Block#2), and a block 3 (Block#3). Each block includes one 1-bit cell and one N-bit cell. The N-bit cell indicates N-bit cell SSB broadcast information. A value of the N-bit cell SSB broadcast information corresponds to an SSB broadcast information index or an SSB broadcast information ID. A correspondence between the SSB broadcast information index or the SSB broadcast information ID and a bit value is described as that in a case in which N is 3 bits. Details are not described herein again.

For example, a cell may also be described as an SCell, or may be described as a serving cell.

Specifically, a dashed arrow 41, a dashed arrow 42, and a dashed arrow 43 shown in FIG. 14 respectively indicate bit positions corresponding to the block 1, the block 2, and the block 3 in a DCI format information block.

For example, the dashed arrow 41 indicates a position of a 1-bit cell in the block 1 starting from a bit 0 and spanning 1 bit, the dashed arrow 42 indicates a position of a 1-bit cell in the block 2 starting from a bit 5 and spanning 1 bit, and the dashed arrow 43 indicates a position of a 1-bit cell in the block 3 starting from a bit 9 and spanning 1 bit.

Specifically, a solid double arrow 44 shown in FIG. 14 indicates a size of a DCI format.

Optionally, in this manner, the DCI signaling may indicate a measurement periodicity or a measurement periodicity index for the SCell. For example, the measurement periodicity includes sf160, sf256, sf320, sf512, sf640, sf1024, and sf1280. sf160 corresponds to 160 subframes, sf256 corresponds to 256 subframes, and the rest may be deduced by analogy.

The measurement periodicity index one-to-one corresponds to the measurement periodicity.

For example, a value 0 of the index corresponds to sf160, a value 1 of the index corresponds to sf256, and the rest may be deduced by analogy.

Specifically, the measurement periodicity or the measurement periodicity index is used only when the SCell is configured on a frequency indicated by a measurement object measObjectNR.

It should be noted that in the energy-saving method provided in this embodiment of this application, a quantity of SCells in the DCI signaling format and a quantity of bits occupied by each SCell are not limited. FIG. 14 is merely an example. For example, each SCell may occupy 3 bits or 5 bits. Specifically, the quantity of SCells and the quantity of bits occupied by each SCell may be determined based on an actual requirement.

S112: Search for the SSB based on the second information, and perform one or more of the following operations: layer 3 RRM measurement of the SCell or measurement result reporting, BFD measurement of the SCell, or CSI detection and reporting of the SCell.

Specifically, the terminal device searches for the SSB based on the SSB broadcast information indicated in the second information, to perform downlink (downlink, DL) time-frequency synchronization and layer 1/layer 3 measurement.

Specifically, one or more of the layer 3 RRM measurement of the SCell or the measurement result reporting, the BFD measurement of the SCell, and the CSI detection and reporting of the SCell are performed.

For example, the CSI reporting includes periodic reporting, semi-persistent reporting, or aperiodic reporting.

In some embodiments, measurement result reporting of a serving cell, namely, the SCell, is performed.

It should be noted that a specific operation to be performed is determined based on an actual configuration of the terminal device. This is not limited in the energy-saving method provided in this embodiment of this application.

In this embodiment of this application, the network device indicates, to the terminal device, the state in which the SSB is broadcast for the SCell, so that the terminal device can quickly detect an SSB signal, and start the layer 3 measurement, layer 1 measurement, or BFD measurement on the SCell, to perform the DL time-frequency synchronization and layer 1/layer 3 measurement. This improves user experience. In addition, the terminal device can learn of the SSB broadcast periodicity and a beam broadcast status more quickly, and quickly perform data transmission. This improves performance of the terminal device.

Optionally, the second information further indicates a BWP identifier, so that the terminal device is further switched to the indicated BWP identifier based on the second information.

It should be noted that both the first information and the second information may indicate deactivation of the SCell and the state in which the SSB is broadcast for the SCell, activation of the SCell and the state in which the SSB is broadcast for the SCell, deactivation of the SCell and the state in which the SSB is not broadcast for the SCell, or activation of the SCell and the state in which the SSB is not broadcast for the SCell. In this scenario, optionally, the first information and the second information are carried in a same piece of signaling to save resources.

For example, the signaling includes at least one of the following: the RRC signaling, the MAC CE signaling, or the DCI signaling.

It should be noted that the energy saving manner provided in this embodiment of this application is further applicable to a scenario in which the terminal device sends an uplink (uplink, UL) wakeup signal (wakeup signal, WUS) to the SCell and/or the PCell under a configuration of the network device.

The following first describes a specific application scenario in which the terminal device sends the UL WUS to the SCell and/or the PCell under the configuration of the network device, so that the network device indicates the terminal device to enter the state in which the SSB is broadcast.

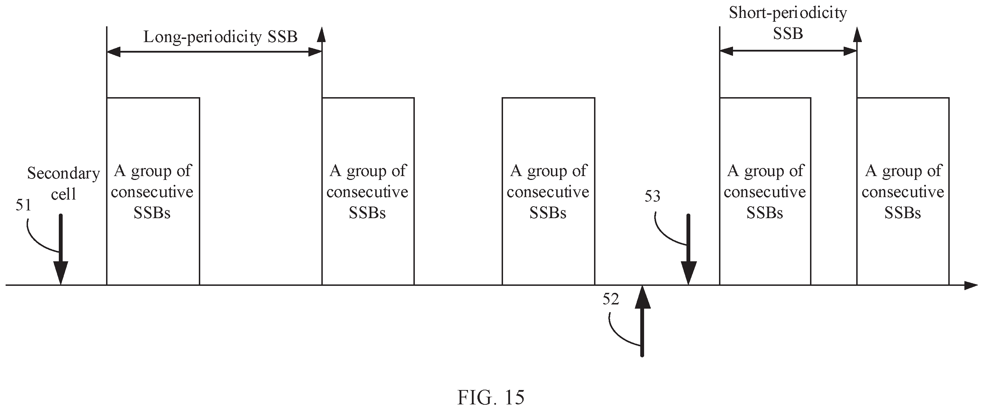

FIG. 15 is a diagram of activating SSB broadcasting via a UL WUS according to an embodiment of this application. As shown in FIG. 15, the scenario in which the SSB broadcasting is activated via the UL WUS includes a long-periodicity SSB, a short-periodicity SSB, and a plurality of groups of consecutive SSBs.

A solid arrow 51 indicates that the network device sends an RRC reconfiguration message to the terminal device, and the RRC reconfiguration message includes a UL WUS or a RACH configuration. A solid arrow 52 indicates that the terminal device sends a UL WUS to the network device. A solid arrow 53 indicates that the network device indicates SSB broadcast information to the terminal device.

Specifically, the network device sends a group of consecutive long-periodicity SSBs on the SCell, the terminal device sends a UL WUS to the SCell under a configuration of the network device, and after receiving the UL WUS sent by the terminal device, the network device sends a group of consecutive long-periodicity SSBs to the network device.

For example, the group of consecutive SSBs may be represented as an SSB burst.

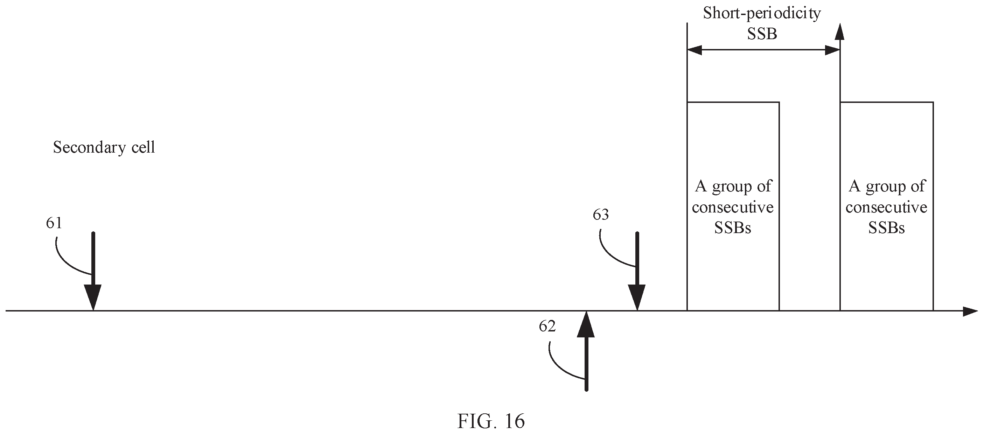

FIG. 16 is another diagram of activating SSB broadcasting via a UL WUS according to an embodiment of this application. As shown in FIG. 16, the scenario in which the SSB broadcasting is activated via the UL WUS includes a short-periodicity SSB and a plurality groups of consecutive SSBs.

A solid arrow 61 indicates that the network device sends an RRC reconfiguration message to the terminal device, and the RRC reconfiguration message includes a UL WUS or a RACH configuration. A solid arrow 62 indicates that the terminal device sends a UL WUS to the network device. A solid arrow 63 indicates that the network device indicates SSB broadcast information to the terminal device.

Specifically, the network device does not send a group of consecutive long-periodicity SSBs on the SCell, the terminal device sends a UL WUS to the SCell under a configuration of the network device, and after receiving the UL WUS sent by the terminal device, the network device sends a group of consecutive periodic SSBs to the network device.

In a case, the network device may start to broadcast the SSB before the network device indicates the SSB broadcast information to the terminal device, as indicated by the solid arrow 63 in FIG. 16. In addition, the terminal device may search for or monitor the SSB based on an SSB periodicity and/or an SSBinburst that is indicated by the network device via the RRC reconfiguration message in advance.

In another case, the network device may start to broadcast the SSB after the network device indicates the SSB broadcast information to the terminal device, as indicated by the solid arrow 63 in FIG. 16. The terminal device may search for the SSB based on a periodicity and/or an SSBinburst in the SSB broadcast information indicated by the network device.

For example, the group of consecutive SSBs may be represented as an SSB burst.

With reference to specific embodiments, the following describes in detail the energy-saving method applicable to a scenario in which the terminal device sends the uplink (uplink, UL) wakeup signal (wakeup signal, WUS) to the network device.

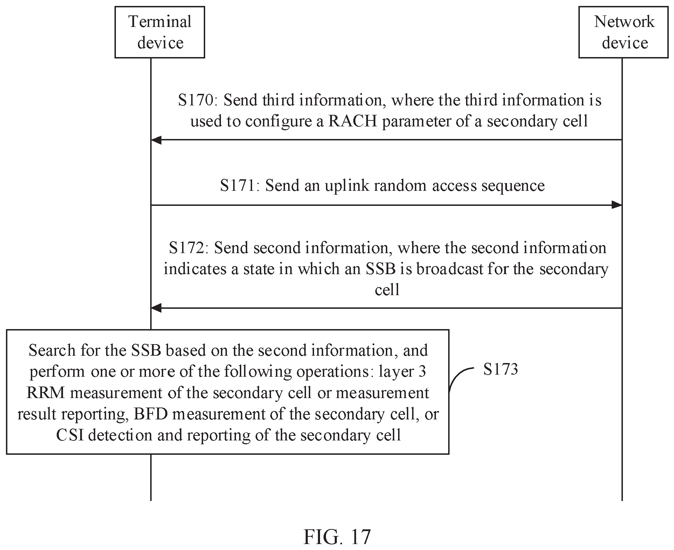

FIG. 17 is a flowchart of an energy-saving method according to another embodiment of this application. As shown in FIG. 17, the energy-saving method includes the following steps.

S170: A network device sends third information, and correspondingly, a terminal device obtains the third information, where the third information is used to configure a RACH parameter of an SCell.

For example, indicating the third information may also be described as sending the third information or transmitting the third information, and obtaining the third information may also be described as receiving the third information.

Optionally, the third information is carried in the RRC reconfiguration message.

Optionally, the RACH parameter includes a mapping relationship between a RACH resource and an SSB broadcast periodicity.

Specifically, the network device configures, via the RRC reconfiguration message, a RACH parameter configuration on the SCell, to request SCell SSB broadcasting.

For example, the mapping relationship between the RACH resource and the SSB broadcast periodicity may be shown in the following table. Table 1 shows a mapping relationship between the RACH resource and the SSB broadcast periodicity provided in this embodiment of this application.

**Table 1**

| RACH resource | SSB broadcast periodicity |
|---|---|
| RACH time-frequency-code domain resource #1 | 5 ms |
| RACH time-frequency-code domain resource #2 | 10 ms |
| RACH time-frequency-code domain resource #3 | 20 ms |
| RACH time-frequency-code domain resource #4 | 40 ms |
| RACH time-frequency-code domain resource #5 | 80 ms |
| RACH time-frequency-code domain resource #6 | 160 ms |

As shown in Table 1, when a value of a RACH resource configuration is 1, a corresponding SSB broadcast periodicity is 5 ms; when a value of a RACH resource configuration is 2, a corresponding SSB broadcast periodicity is 10 ms; when a value of a RACH resource configuration is 3, a corresponding SSB broadcast periodicity is 20 ms; when a value of a RACH resource configuration is 4, a corresponding SSB broadcast periodicity is 40 ms; when a value of a RACH resource configuration is 8, a corresponding SSB broadcast periodicity is 80 ms; or when a value of a RACH resource configuration is 6, a corresponding SSB broadcast periodicity is 160 ms. For another example, when a preamble preamble sequence is 1, a corresponding SSB broadcast periodicity is 5 ms; or when a preamble preamble sequence is 2, a corresponding SSB broadcast periodicity is 10 ms.

Table 2 shows another mapping relationship between the RACH resource and the SSB broadcast periodicity provided in this embodiment of this application.

**Table 2**

| RACH resource | SSB broadcast periodicity |
|---|---|
| RACH time-frequency-code domain resource #1 | 5 ms or 10 ms |
| RACH time-frequency-code domain resource #2 | 20 ms or 40 ms |
| RACH time-frequency-code domain resource #3 | 80 ms or 160 ms |

As shown in Table 2, when a value of a RACH resource configuration is 1, a corresponding SSB broadcast periodicity may be 5 ms or 10 ms; when a value of a RACH resource configuration is 2, a corresponding SSB broadcast periodicity may be 20 ms or 40 ms; or when a value of a RACH resource configuration is 3, a corresponding SSB broadcast periodicity may be 80 ms or 160 ms.

In the mapping relationship, the network device may indicate, based on the mapping relationship between the RACH resource and the SSB broadcast periodicity, any one of the two periodicities of the SSB broadcast periodicity to the terminal device.

It should be noted that the mapping relationships between the RACH resource and the SSB broadcast periodicity shown in Table 1 and Table 2 are merely a part of examples, and the mapping relationships are not limited in the energy-saving method provided in this embodiment of this application.

S171: The terminal device sends an uplink random access sequence.

Optionally, that the terminal device sends the uplink random access sequence may also be described as that the terminal device sends a scheduling request.

Optionally, the uplink random access sequence is used to request second information.

It may be understood that the terminal device may send the uplink random access sequence to the network device based on a traffic volume requirement of the terminal device or a traffic volume threshold configured by the network device, so that the network device indicates the SCell SSB broadcasting. For example, the traffic volume threshold configured by the network device is configured by the network device via an RRC reconfiguration message.

For example, the SCell SSB broadcasting may be that the SCell is activated and an SSB is broadcast, or may be that the SCell is deactivated and an SSB is broadcast.

S172: The network device sends the second information, and correspondingly, the terminal device obtains the second information, where the second information indicates a state in which the SSB is broadcast for the SCell.

For example, sending the second information may also be described as indicating the second information or transmitting the second information, and obtaining the second information may also be described as receiving the second information.

For example, the network device sends the second information via the SCell, or may send the second information via a PCell or another SCell.

For example, after resuming the SSB broadcasting on the SCell, the network device sends the second information; or after sending the second information, the network device resumes the SSB broadcasting on the SCell.

It should be noted that, in the energy-saving method provided in this embodiment of this application, a sequence of resuming the SSB broadcasting on the SCell and sending the second information by the network device is not limited.

Optionally, the state in which the SSB is broadcast for the SCell may also be described as that the SCell is in a state in which the SSB is broadcast.

Optionally, in the state in which the SSB is broadcast for the SCell, the SCell sends the SSB.

Optionally, the state in which the SSB is broadcast for the SCell may also be described as an initial state where the SCell is in the state in which the SSB is broadcast.

For example, the state in which the SSB is broadcast for the SCell may be that the SCell is deactivated and the SSB is broadcast, or that the SCell is activated and the SSB is broadcast.

Optionally, the second information indicates deactivation of the SCell and the state in which the SSB is broadcast for the SCell, or the second information indicates activation of the SCell and the state in which the SSB is broadcast for the SCell.

Optionally, the second information is carried in at least one of the following signaling: RRC signaling, MAC CE signaling, or DCI signaling.

It may be understood that the second information may be carried in any one of the foregoing signaling, or may be simultaneously carried in at least two pieces of signaling.

Optionally, the RRC signaling includes an RRC reconfiguration message, and the DCI signaling includes layer 1 signaling and/or layer 3 signaling.

For example, the RRC reconfiguration message may also be described as RRC reconfiguration information.

Optionally, when the second information is carried in the MAC CE signaling or the DCI signaling, the second information may further indicate SSB broadcast information.

Optionally, the SSB broadcast information includes at least one of the following: the SSB broadcast periodicity, an SSB time-domain position, an SSB broadcast periodicity identifier, and an SSB broadcast information identifier.

Optionally, a mapping relationship between the SSB broadcast periodicity identifier and the SSB broadcast periodicity is carried in an RRC reconfiguration message; or a mapping relationship between the SSB broadcast information identifier and the SSB broadcast periodicity and the SSB time-domain position is carried in the RRC reconfiguration message.

It should be noted that, in the mapping relationship between the SSB broadcast information identifier and the SSB broadcast periodicity and the SSB time-domain position is carried in the RRC reconfiguration message, the SSB broadcast information identifier and the SSB broadcast periodicity may be considered as a whole.

Optionally, when the second information is carried in the MAC CE signaling or the DCI signaling, the second information may further indicate a measurement periodicity or a measurement periodicity index for the SCell. For example, the measurement periodicity includes sf160, sf256, sf320, sf512, sf640, sf1024, and sf1280. sf160 corresponds to 160 subframes, sf256 corresponds to 256 subframes, and the rest may be deduced by analogy.

The measurement periodicity index one-to-one corresponds to the measurement periodicity.

For example, a value 0 of the index corresponds to sf160, a value 1 of the index corresponds to sf256, and the rest may be deduced by analogy.

Specifically, the measurement periodicity or the measurement periodicity index is used only when the SCell is configured on a frequency indicated by a measurement object measObjectNR.

Optionally, the MAC CE signaling used to carry the second information includes random access response (random access response, RAR) signaling.

The following describes in detail an implementation of the random access response signaling.

Specifically, a MAC subheader includes a logical channel ID indicating that a MAC control command is an enhanced random access response including the SSB broadcast information.

In a possible implementation, a periodicity index (PeriodicityIndex) MAC subprotocol data unit (protocol data unit, PDU) and an SSB time-domain position burst (SSB-PositionInBurst) MAC subPDU are added to original RAR signaling.

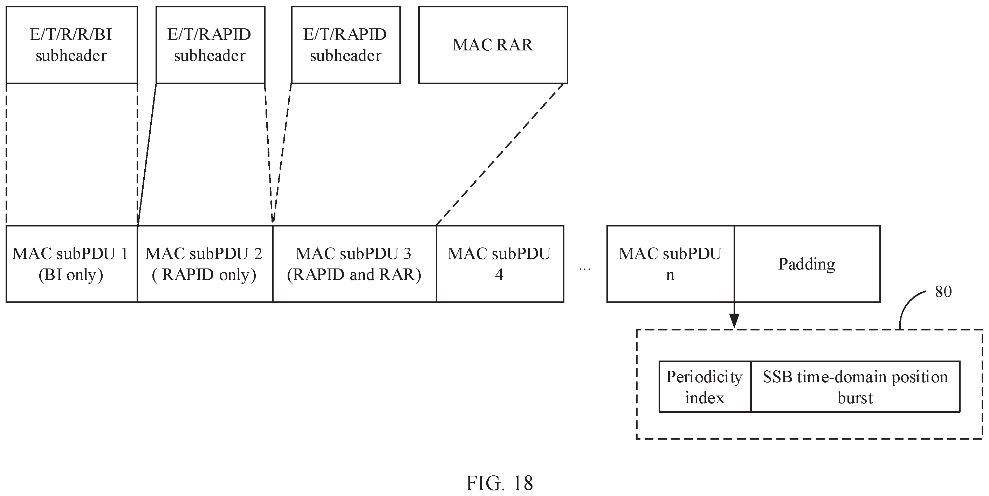

FIG. 18 is a diagram of another MAC CE signaling according to an embodiment of this application. As shown in FIG. 18, a periodicity index and an SSB time-domain position burst that are indicated in a dashed box 80 are a MAC subPDU added in original RAR signaling.

As shown in FIG. 18, a backoff indicator (backoff indicator, BI) field identifies an overload condition of a cell, and a random access preamble identifier (random access preamble identifier, PAPID) field identifies a transmitted random access preamble.

In another possible implementation, an SSB broadcast information index (SSB-BroadcastInfoIndex) MAC subPDU (subPDU) is added to an original MAC RAR command.

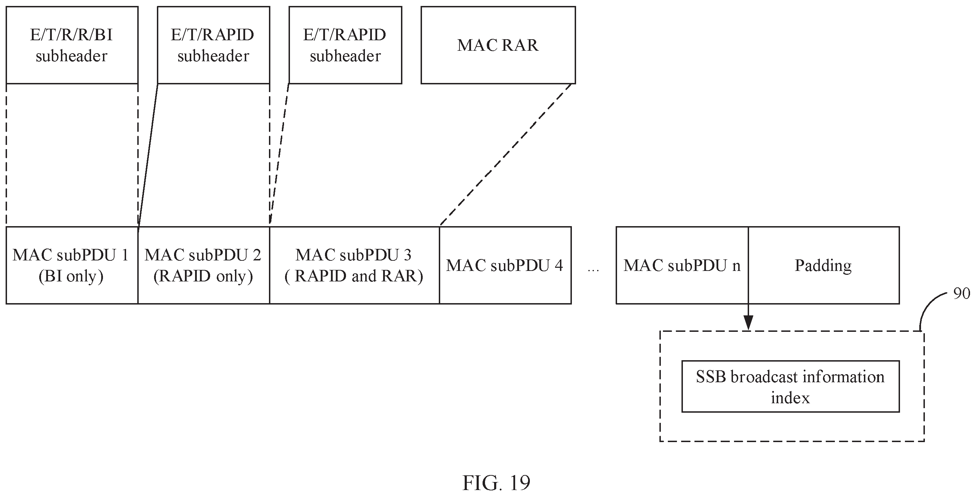

FIG. 19 is a diagram of another MAC CE signaling according to an embodiment of this application. As shown in FIG. 19, an SSB broadcast information index indicated in a dashed box 90 is a MAC subPDU added in original RAR signaling.

As shown in FIG. 19, meanings indicated by a BI field and a PAPID field are similar to those described above. Details are not described herein again.

Optionally, a specific implementation in which the second information is carried in the DCI signaling is similar to the implementation in which the first information carried in the DCI signaling in step S402. Details are not described herein again.

S173: Search for the SSB based on the second information, and perform one or more of the following operations: layer 3 RRM measurement of the SCell or measurement result reporting, BFD measurement of the SCell, or CSI detection and reporting of the SCell.

Specifically, an implementation is similar to that in step S112. Details are not described herein again.

In this embodiment of this application, in a scenario in which the terminal device sends a UL WUS to the network device, the network device indicates the SSB broadcast information via RAR and the DCI signaling, so that the terminal device can quickly detect an SSB signal, and fast SCell SSB activation is implemented. This improves user experience while implementing saving energy of the network device.

The foregoing describes in detail the energy-saving methods provided in embodiments of this application with reference to the accompanying drawings. The following describes in detail apparatuses provided in embodiments of this application with reference to accompanying drawings.

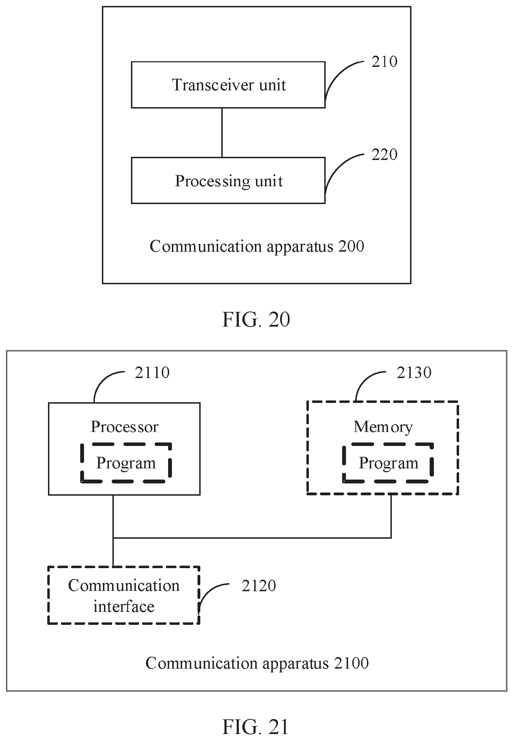

FIG. 20 to FIG. 23 are block diagrams of possible communication apparatuses provided in embodiments of this application. These communication apparatuses may be configured to implement the functions of the terminal device or the network device in the foregoing method embodiments. Therefore, the communication apparatuses can also achieve the beneficial effects of the foregoing method embodiments. In embodiments of this application, the communication apparatus may be the terminal device or the network device in the method embodiments shown in FIG. 2 to FIG. 4, FIG. 11, or FIG. 17, or may be a component (for example, a chip, a chip system, or a processor) configured in the terminal device or the network device, or may be a logical module or software that can implement a part or all of functions of the terminal device or the network device.

FIG. 20 is a block diagram of a communication apparatus according to an embodiment of this application. As shown in FIG. 20, the communication apparatus 200 may include a transceiver unit 210 and a processing unit 220. The communication apparatus 200 may be configured to perform the steps performed by the terminal device or the network device in the method embodiments shown in FIG. 2 to FIG. 4, FIG. 11, or FIG. 17.

For example, when the apparatus 200 is configured to perform the steps performed by the terminal device in the method shown in FIG. 2, the transceiver unit 210 is configured to obtain first information, where the first information indicates a state in which a synchronization signal block is not broadcast for an SCell; and the processing unit 220 is configured to perform energy-saving processing for the SCell based on the first information.

Optionally, in the state in which the SSB is not broadcast for the SCell, the SCell does not send the SSB.

Optionally, the processing unit 220 is specifically configured to: if layer 3 RRM measurement of the SCell is configured, skip performing or stop the layer 3 RRM measurement of the SCell; or if BFD of the SCell is configured, skip performing or stop the BFD measurement of the SCell; or if CSI reporting of the SCell is configured, skip performing or stop the CSI detection and reporting of the SCell.

Optionally, the first information indicates deactivation of the SCell and the state in which the SSB is not broadcast for the SCell.

Optionally, the transceiver unit 210 is further configured to obtain second information, where the second information indicates a state in which the SSB is broadcast for the SCell.

Optionally, in the state in which the SSB is broadcast for the SCell, the SCell sends the SSB.

Optionally, the second information indicates deactivation of the SCell and the state in which the SSB is broadcast for the SCell, or the second information indicates activation of the SCell and the state in which the SSB is broadcast for the SCell.

Optionally, the first information is carried in at least one of the following signaling: RRC signaling, MAC CE signaling, or DCI signaling.

Optionally, the second information is carried in at least one of the following signaling: RRC signaling, MAC CE signaling, or DCI signaling.

Optionally, the first information and the second information are carried in a same piece of signaling, and the signaling includes at least one of the following: the RRC signaling, the MAC CE signaling, or the DCI signaling.

Optionally, if the first information is carried in the RRC signaling, the first information is indicated when the SCell is added, or a handover is performed, or an RRC connection is resumed.

Optionally, the second information further indicates SSB broadcast information, and the processing unit 220 is further configured to: search for the SSB based on the second information, and perform at least one of the following operations: the layer 3 RRM measurement of the SCell, the BFD measurement of the SCell, or the CSI detection and reporting of the SCell.

Optionally, the second information further indicates a BWP ID, and the processing unit 220 is further configured to switch to the indicated BWP ID based on the second information.

Optionally, the SSB broadcast information includes at least one of the following: an SSB broadcast periodicity, an SSB time-domain position, an SSB broadcast periodicity identifier, or an SSB broadcast information identifier.

Optionally, a mapping relationship between the SSB broadcast periodicity identifier and the SSB broadcast periodicity is carried in an RRC reconfiguration message.

Alternatively, mapping relationship between the SSB broadcast information identifier and the SSB broadcast periodicity and the SSB time-domain position is carried in the RRC reconfiguration message.

Optionally, the transceiver unit 210 is further configured to obtain the second information in response to sending an uplink random access sequence, where the uplink random access sequence is used to request the second information.

Optionally, the transceiver unit 210 is further configured to obtain third information, where the third information is used to configure a RACH parameter of the SCell, and the RACH includes a mapping relationship between a RACH resource and the SSB broadcast periodicity.

For example, when the apparatus 200 is configured to perform the steps performed by the network device in the method shown in FIG. 2, the transceiver unit 210 is configured to send first information, where the first information indicates a state in which an SSB is not broadcast for an SCell.

Optionally, in the state in which the SSB is not broadcast for the SCell, the SCell does not send the SSB.

Optionally, the first information indicates deactivation of the SCell and the state in which the SSB is not broadcast for the SCell.

Optionally, the transceiver unit 210 is further configured to send second information, where the second information indicates a state in which the SSB is broadcast for the SCell.

Optionally, in the state in which the SSB is broadcast for the SCell, the SCell sends the SSB.

Optionally, the second information indicates deactivation of the SCell and the state in which the SSB is broadcast for the SCell, or the second information indicates activation of the SCell and the state in which the SSB is broadcast for the SCell.

Optionally, the first information is carried in at least one of the following signaling: RRC signaling, media access control control element (media access control control element, MAC CE) signaling, or downlink control information (downlink control information, DCI) signaling.

Optionally, the second information is carried in at least one of the following signaling: RRC signaling, MAC CE signaling, or DCI signaling.

Optionally, the first information and the second information are carried in a same piece of signaling, and the signaling includes at least one of the following: the RRC signaling, the MAC CE signaling, or the DCI signaling.

Optionally, if the first information is carried in the RRC signaling, the first information is indicated when the SCell is added, or a handover is performed, or an RRC connection is resumed.

Optionally, the second information further indicates SSB broadcast information.

Optionally, the second information further indicates a BWP ID.

Optionally, the SSB broadcast information includes at least one of the following: an SSB broadcast periodicity, an SSB time-domain position, an SSB broadcast periodicity identifier, or an SSB broadcast information identifier.

Optionally, a mapping relationship between the SSB broadcast periodicity identifier and the SSB broadcast periodicity is carried in an RRC reconfiguration message.

Alternatively, a mapping relationship between the SSB broadcast information identifier and the SSB broadcast periodicity and the SSB time-domain position is carried in the RRC reconfiguration message.

Optionally, the transceiver unit 210 is further configured to send the second information in response to receiving an uplink random access sequence, where the uplink random access sequence is used to request the second information.

Optionally, the transceiver unit 210 is further configured to send third information, where the third information is used to configure a random access channel parameter of the SCell, and the random access channel parameter includes a mapping relationship between a random access channel resource and the synchronization signal block broadcast periodicity.

Optionally, the third information is carried in the RRC reconfiguration message.

It should be noted that the transceiver unit may also be referred to as a transceiver module, a transceiver, a transceiver machine, a transceiver apparatus, or the like. The processing unit may also be referred to as a processor, a processing board, a processing module, a processing apparatus, or the like. Optionally, the transceiver unit is configured to perform a sending operation and a receiving operation on a terminal device side or a network device side in the foregoing method. A component that is in the communication module and that is configured to implement a receiving function may be considered as a receiving unit, and a component that is in the communication module and that is configured to implement a sending function may be considered as a sending unit. That is, the transceiver unit includes the receiving unit and the sending unit.

It should be further noted that in a possible design, the transceiver unit and/or the processing unit may be implemented via a virtual module. For example, the processing unit may be implemented via a software functional unit or a virtual apparatus, and the transceiver unit may be implemented via a software function or a virtual apparatus. In another possible design, the processing unit or the transceiver unit may be implemented via a physical apparatus. For example, if the apparatus is implemented via a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

In this embodiment of this application, division into the units is an example, and is merely logical function division. In actual implementation, another division manner may be used. In addition, functional modules in the examples in embodiments of this application may be integrated into one processor, or each of the modules may exist alone physically, or two or more modules are integrated into one module. The integrated module may be implemented in a form of hardware, or may be implemented in a form of a software functional module.

FIG. 21 is another block diagram of a communication apparatus according to an embodiment of this application. As shown in FIG. 21, the communication apparatus 2100 includes a processor 2110. The processor 2110 may be configured to execute a computer program or instructions in a memory, to implement the steps performed by the terminal device or the steps performed by the network device in the method embodiments shown in FIG. 2 to FIG. 4, FIG. 11, or FIG. 17.

Optionally, the apparatus 2100 further includes a communication interface 2120. The processor 2110 and the communication interface 2120 are coupled to each other. It may be understood that the communication interface 2120 may be a transceiver or an input/output interface.

Optionally, the communication apparatus 2100 may further include a memory 2130, configured to: store the instructions executed by the processor 2110, or store input data required for running the instructions by the processor 2110, or store data generated after the processor 2110 runs the instructions.

When the communication apparatus 2100 is configured to implement the methods shown in FIG. 2 to FIG. 4, FIG. 11, or FIG. 17, the processor 2110 is configured to perform a function of the processing unit, and the communication interface 2120 is configured to perform a function of the receiving unit and/or a function of the sending unit. Whether the communication interface 2120 is configured to perform sending or receiving may be specifically determined based on whether the communication interface 2120 is configured to perform a sending action or a receiving action in a solution performed by the communication apparatus 2100. For example, the communication interface 2120 may be configured to perform step S201 in the method embodiment shown in FIG. 2.

When the communication apparatus 2100 is a chip used in the terminal device, the chip implements the functions of the terminal device in the foregoing method embodiment. The chip of the terminal device receives a signal from another module (for example, a radio frequency module or an antenna) in the terminal, and the signal may be sent by the network device to the terminal device. Alternatively, the chip of the terminal device sends a signal to another module (for example, a radio frequency module or an antenna) in the terminal device, and the signal may be sent by the terminal device to the network device.

When the communication apparatus 2100 is a chip used in the network device, the chip implements the functions of the network device in the foregoing method embodiment. The chip of the network device receives a signal from another module (for example, a radio frequency module or an antenna) in the network device, and the signal may be sent by the terminal device to the network device. Alternatively, the chip of the network device sends a signal to another module (for example, a radio frequency module or an antenna) in the network device, and the signal may be sent by the network device to the terminal device.

It may be understood that when the communication apparatus 2100 is the terminal device or the network device, the communication interface 1220 may be a transceiver, and may specifically include a transmitter and a receiver. The transmitter is configured to send a signal, and the receiver is configured to receive a signal. When the communication apparatus 2100 is the chip used in the terminal device or the network device, the communication interface 1220 may be an input/output circuit, a bus, a module, a pin, or another type of communication interface. An input circuit in the input/output circuit may be configured to perform receiving, and an output interface may be configured to perform sending.

It should be understood that in the communication apparatus 2100 shown in FIG. 21, the processor 2120 may correspond to the processing unit 210 in the foregoing communication apparatus 200, and the communication interface 2120 may correspond to the transceiver unit 220 in the foregoing communication apparatus 200.

It should be further understood that the coupling in embodiments of this application is an indirect coupling or a communication connection between apparatuses, units, or modules, may be in an electrical, mechanical, or another form, and is used for information exchange between the apparatuses, the units, or the modules. The processor 2110 may cooperate with the memory 2130. A specific connection medium between the processor 2110, the communication interface 2120, and the memory 2130 is not limited in embodiments of this application.

Optionally, the processor 2110, the communication interface 2120, and the memory 2130 are connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

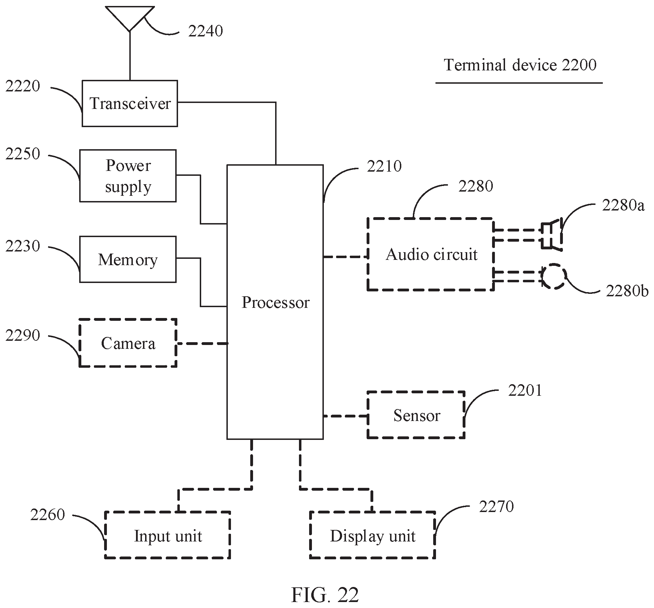

FIG. 22 is a diagram of a structure of a terminal device according to an embodiment of this application. As shown in FIG. 22, the terminal device 2200 may be used in the communication system shown in FIG. 1, to perform the functions of the terminal device in the foregoing method embodiment. As shown in the figure, the terminal device 2200 includes a processor 2210 and a transceiver 2220. Optionally, the terminal device 2200 further includes a memory 2230. The processor 2210, the transceiver 2220, and the memory 2230 may communicate with each other through an internal connection path, to transfer a control signal and/or a data signal. The memory 2230 is configured to store a computer program. The processor 2210 is configured to: invoke the computer program from the memory 2230 and run the computer program, to control the transceiver 2220 to send and receive signals. Optionally, the terminal device 2200 may further include an antenna 2240, configured to send, via a wireless signal, uplink data or uplink control signaling output by the transceiver 2220.

The processor 2210 and the memory 2230 may be combined into one processing apparatus. The processor 2210 is configured to execute program code stored in the memory 2230 to implement the foregoing functions. During specific implementation, the memory 2230 may alternatively be integrated into the processor 2210, or may be independent of the processor 2230. The processor 2230 may correspond to the processing unit in FIG. 20 or the processor in FIG. 21.

The transceiver 2220 may correspond to the transceiver unit in FIG. 20 or the communication interface in FIG. 21, and may also be referred to as a transceiver unit. The transceiver 2220 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 2200 shown in FIG. 22 can implement the processes of the terminal device in the method embodiments shown in FIG. 2 to FIG. 4, FIG. 11, or FIG. 17. The operations and/or functions of the modules in the terminal device 2200 are respectively intended to implement corresponding procedures in the foregoing method embodiments. For details, refer to the descriptions in the foregoing method embodiments. To avoid repetition, detailed descriptions are properly omitted herein.

The processor 2210 may be configured to perform an action that is implemented inside the terminal device and that is described in the foregoing method embodiments. The transceiver 2220 may be configured to perform a sending action by the terminal device for the network device or a receiving operation from the network device in the foregoing method embodiments. For details, refer to the descriptions in the foregoing method embodiments. Details are not described herein again.

Optionally, the terminal device 2200 may further include a power supply 2250, configured to supply power to various components or circuits in the terminal device. In this embodiment of this application, a rectifier may be connected between the power supply 2250 and the antenna 2240. After an electromagnetic wave signal is received by the antenna 2240 and converted into an alternating current signal, the alternating current signal may be further converted into a direct current signal via the rectifier, and then the direct current signal is output to the power supply 2250.

In addition, to improve a function of the terminal device, the terminal 2200 may further include one or more of an input unit 2260, a display unit 2270, an audio circuit 2280, a camera 2290, a sensor 2201, and the like. The audio circuit may further include a speaker 2280a, a microphone 2280b, and the like.

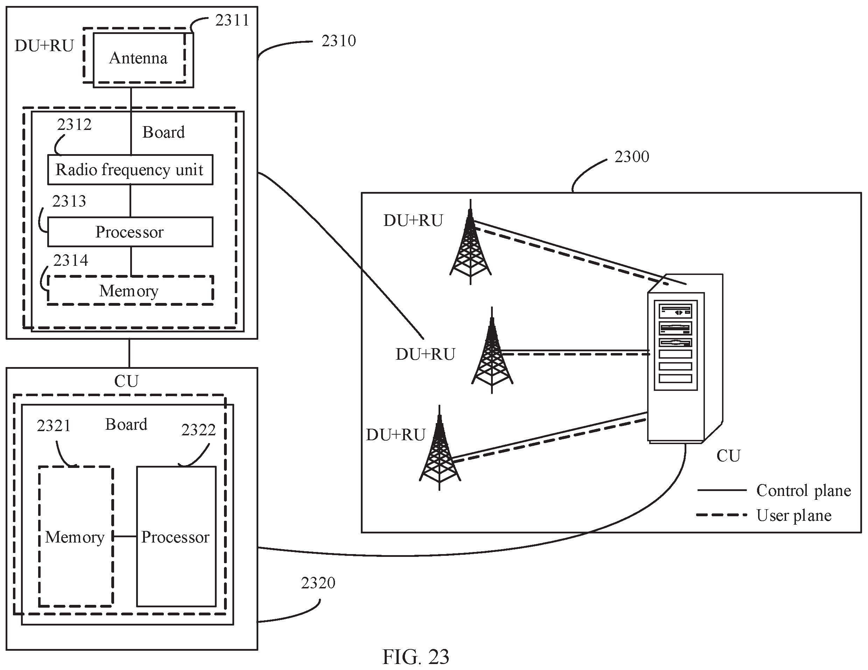

FIG. 23 is a diagram of a structure of a network device according to an embodiment of this application, for example, may be a diagram of a structure of a base station. As shown in FIG. 23, the base station 2300 may include one or more of the following: one or more (DU+radio frequency unit (remote radio unit, RU)) 2310 and one or more CUs 2320. The CU 2320 may communicate with a next-generation core (next-generation core, NG core). The DU may include at least one antenna 2311, at least one radio frequency unit 2312, at least one processor 2313, and at least one memory 2314. The DU is mainly configured to receive and send radio frequency signals, perform conversion between a radio frequency signal and a baseband signal, and perform some baseband processing. The CU 2320 may include at least one processor 2322 and at least one memory 2321. The CU 2320 and the DU may communicate with each other through an interface. A control plane (control plane, CP) interface may be Fs-C, for example, F1-C, and a user plane (user plane, UP) interface may be Fs-U, for example, F1-U. The DU and the RU may cooperate to jointly implement a function of a physical (physical, PHY) layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function and a radio frequency function of the PHY layer. The higher-layer function of the PHY layer may include a part of functions of the PHY layer, and the part of functions is closer to a MAC layer. The lower-layer function of the PHY layer may include another part of functions of the PHY layer, and the part of functions is closer to an intermediate radio frequency side.

The CU 2320 is mainly configured to perform baseband processing, control the base station, and the like. The DU and the CU 2320 may be physically disposed together, or may be physically separated, that is, in a distributed base station. The CU 2320 is a control center of the base station, may correspond to the processing unit in FIG. 20 or the processor in FIG. 21, may also be referred to as a processing unit, and is mainly configured to complete a baseband processing function. For example, the CU 2320 may be configured to control the base station to perform an operation procedure related to the access network device in the foregoing method embodiments.

Specifically, baseband processing on the CU and the DU may be divided based on a protocol layer of a wireless network. For example, functions of a packet data convergence protocol (packet data convergence protocol, PDCP) layer and a protocol layer above the PDCP layer are set on the CU, and functions of protocol layers below the PDCP, for example, a radio link control (radio link control, RLC) layer and the MAC layer, are set on the DU. For another example, the CU implements functions of an RRC layer and the PDCP layer, and the DU implements functions of the RLC layer, the MAC layer, and the PHY layer.

In addition, optionally, the base station 2300 may include one or more radio frequency units (RU), one or more DUs, and one or more CUs. The DU may include at least one processor 2313 and at least one memory 2314, the RU may include at least one antenna 2311 and at least one radio frequency unit 2312, and the CU may include at least one processor 2322 and at least one memory 2321.

In an example, the CU 2320 may include one or more boards, and a plurality of boards may jointly support a radio access network (for example, a 5G network) of a single access standard, or may separately support radio access networks (for example, an LTE network, a 5G network, or another network) of different access standards. The memory 2321 and the processor 2322 may serve the one or more boards. In other words, a memory and a processor may be disposed on each board. Alternatively, a plurality of boards may share a same memory and a same processor. In addition, a necessary circuit may further be disposed on each board. The DU may include one or more boards, and a plurality of boards may jointly support a radio access network (for example, a 5G network) of a single access standard, or may separately support radio access networks (for example, an LTE network, a 5G network, or another network) of different access standards. The memory 2314 and the processor 2313 may serve the one or more boards. In other words, a memory and a processor may be disposed on each board. Alternatively, a plurality of boards may share a same memory and a same processor. In addition, a necessary circuit may further be disposed on each board.

It should be understood that the base station 2300 shown in FIG. 23 can implement the processes of the network device in the method embodiments shown in FIG. 2 to FIG. 4, FIG. 11, or FIG. 17. The operations and/or functions of the modules in the base station 2300 are respectively intended to implement corresponding procedures in the foregoing method embodiments. For details, refer to the descriptions in the foregoing method embodiments. To avoid repetition, detailed descriptions are properly omitted herein.

The CU 2320 may be configured to perform an action that is implemented inside the network device and that is described in the foregoing method embodiments. The DU 2310 may be configured to perform a sending action by the network device for the terminal device or a receiving action from the terminal device in the foregoing method embodiments. For details, refer to the descriptions in the foregoing method embodiments. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a communication system. The communication system includes the foregoing network device and terminal device.

This application further provides a computer program product. The computer program product includes a computer program (which may also be referred to as code or instructions). When the computer program is run, a computer is caused to perform the method performed by the terminal or the method performed by the network device in the embodiment shown in FIG. A.

This application further provides a computer-readable storage medium. The computer-readable storage medium stores a computer program (which may also be referred to as code or instructions). When the computer program is run, a computer is caused to perform the method performed by the terminal or the method performed by the network device in the embodiment shown in FIG. A.

Terms such as "unit" and "module" used in this specification may represent computer-related entities, hardware, firmware, combinations of hardware and software, software, or software being executed.

A person of ordinary skill in the art may be aware that various illustrative logical blocks (illustrative logical blocks) and steps (steps) described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or omitted. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state disk, SSD)), or the like.

When functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy-saving method, comprising:
obtaining first information, wherein the first information indicates a state in which a synchronization signal block is not broadcast for a secondary cell; and
performing energy-saving processing for the secondary cell based on the first information.

2. The method according to claim 1, wherein in the state in which the synchronization signal block is not broadcast for the secondary cell, the secondary cell does not send the synchronization signal block.

3. The method according to claim 1, wherein the energy-saving processing for the secondary cell comprises at least one of the following processing manners:
if layer 3 radio resource management measurement of the secondary cell is configured, skipping performing or stopping the layer 3 radio resource management measurement of the secondary cell;
if beam failure detection of the secondary cell is configured, skipping performing or stopping the beam failure detection measurement of the secondary cell; or
if channel state information reporting of the secondary cell is configured, skipping performing or stopping the channel state information detection and reporting of the secondary cell.

4. The method according to any one of claims 1 to 3, wherein the first information indicates deactivation of the secondary cell and the state in which the synchronization signal block is not broadcast for the secondary cell.

5. The method according to any one of claims 1 to 4, further comprising:
obtaining second information, wherein the second information indicates a state in which the synchronization signal block is broadcast for the secondary cell.

6. The method according to claim 5, wherein in the state in which the synchronization signal block is broadcast for the secondary cell, the secondary cell sends the synchronization signal block.

7. The method according to claim 5 or 6, wherein the second information indicates deactivation of the secondary cell and the state in which the synchronization signal block is broadcast for the secondary cell, or the second information indicates activation of the secondary cell and the state in which the synchronization signal block is broadcast for the secondary cell.

8. The method according to any one of claims 5 to 7, wherein the first information is carried in at least one of the following signaling:
radio resource control signaling, media access control control element signaling, or downlink control information signaling;
and/or
the second information is carried in at least one of the following signaling:
the radio resource control signaling, the media access control control element signaling, or the downlink control information signaling.

9. The method according to any one of claims 5 to 8, wherein the first information and the second information are carried in a same piece of signaling, and the signaling comprises at least one of the following: the radio resource control signaling, the media access control control element signaling, or the downlink control information signaling.

10. The method according to any one of claims 5 to 9, wherein if the first information is carried in the radio resource control signaling, the first information is indicated when the secondary cell is added, a handover is performed, or a radio resource control connection is resumed.

11. The method according to any one of claims 5 to 10, wherein the second information further indicates synchronization signal block broadcast information, and the method further comprises:
searching for the synchronization signal block based on the second information, and performing at least one of the following operations:
the layer 3 radio resource management measurement of the secondary cell;
the beam failure detection measurement of the secondary cell; or
the channel state information detection and reporting of the secondary cell.

12. The method according to claim 11, wherein the synchronization signal block broadcast information comprises at least one of the following: a synchronization signal block broadcast periodicity, a synchronization signal block time-domain position, a synchronization signal block broadcast periodicity identifier, or a synchronization signal block broadcast information identifier.

13. The method according to claim 12, wherein a mapping relationship between the synchronization signal block broadcast periodicity identifier and the synchronization signal block broadcast periodicity is carried in radio resource control reconfiguration information; or
a mapping relationship between the SSB broadcast information identifier and the SSB broadcast periodicity and the SSB time-domain position is carried in the RRC reconfiguration message.

14. The method according to any one of claims 5 to 13, wherein obtaining the second information comprises:
obtaining the second information in response to sending an uplink random access sequence, wherein the uplink random access sequence is used to request the second information.

15. The method according to any one of claims 5 to 14, further comprising:
obtaining third information, wherein the third information is used to configure a random access channel parameter of the secondary cell, and the random access channel parameter comprises a mapping relationship between a random access channel resource and the synchronization signal block broadcast periodicity.

16. An energy-saving method, comprising:
sending first information, wherein the first information indicates a state in which a synchronization signal block is not broadcast for a secondary cell.

17. The method according to claim 16, wherein in the state in which the synchronization signal block is not broadcast for the secondary cell, the secondary cell does not send the synchronization signal block.

18. The method according to claim 16 or 17, wherein the first information indicates deactivation of the secondary cell and the state in which the synchronization signal block is not broadcast for the secondary cell.

19. The method according to any one of claims 16 to 18, further comprising:
sending second information, wherein the second information indicates a state in which the synchronization signal block is broadcast for the secondary cell.

20. The method according to claim 19, wherein in the state in which the synchronization signal block is broadcast for the secondary cell, the secondary cell sends the synchronization signal block.

21. The method according to claim 19 or 20, wherein the second information indicates a state in which the secondary cell is deactivated and the synchronization signal block is broadcast for the secondary cell, or the second information indicates a state in which the secondary cell is activated and the synchronization signal block is broadcast for the secondary cell.

22. The method according to any one of claims 19 to 21, wherein the first information is carried in at least one of the following signaling:
radio resource control signaling, media access control control element signaling, or downlink control information signaling;
and/or the second information is carried in at least one of the following signaling:
the radio resource control signaling, the media access control control element signaling, or the downlink control information signaling.

23. The method according to any one of claims 19 to 22, wherein the first information and the second information are carried in a same piece of signaling, and the signaling comprises at least one of the following: the radio resource control signaling, the media access control control element signaling, or the downlink control information signaling.

24. The method according to any one of claims 19 to 23, wherein if the first information is carried in the radio resource control signaling, the first information is indicated when the secondary cell is added, a handover is performed, or a radio resource control connection is resumed.

25. The method according to any one of claims 19 to 24, wherein the second information further indicates synchronization signal block broadcast information.

26. The method according to claim 25, wherein the synchronization signal block broadcast information comprises at least one of the following: a synchronization signal block broadcast periodicity, a synchronization signal block time-domain position, a synchronization signal block broadcast periodicity identifier, or a synchronization signal block broadcast information identifier.

27. The method according to claim 26, wherein a mapping relationship between the synchronization signal block broadcast periodicity identifier and the synchronization signal block broadcast periodicity is carried in radio resource control reconfiguration information; or
a mapping relationship between the SSB broadcast information identifier and the SSB broadcast periodicity and the SSB time-domain position is carried in the RRC reconfiguration message.

28. The method according to any one of claims 19 to 27, wherein sending the second information comprises:
sending the second information in response to receiving an uplink random access sequence, wherein the uplink random access sequence is used to request the second information.

29. The method according to any one of claims 19 to 28, further comprising:
sending third information, wherein the third information is used to configure a random access channel parameter of the secondary cell, and the random access channel parameter comprises a mapping relationship between a random access channel resource and the synchronization signal block broadcast periodicity.

30. A communication apparatus, comprising a unit configured to implement the method according to any one of claims 1 to 15, or comprising a unit configured to implement the method according to any one of claims 16 to 29.

31. A communication apparatus, comprising at least one processor, wherein
the at least one processor is configured to perform the method according to any one of claims 1 to 15, or to perform the method according to any one of claims 16 to 29.

32. A computer-readable storage medium, wherein the storage medium stores a computer program or instructions, and when the computer program or the instructions are executed by a computer, the method according to any one of claims 1 to 15 or the method according to any one of claims 16 to 29 is implemented.

33. A chip system, comprising at least one processor and a communication interface, wherein the communication interface and the at least one processor are interconnected via a line, and the at least one processor is configured to run a computer program or instructions, to perform the method according to any one of claims 1 to 15 or the method according to any one of claims 16 to 29.

34. A computer program product, wherein the computer program product comprises instructions, and when the instructions are executed by a computer, the method according to any one of claims 1 to 15 or the method according to any one of claims 16 to 29 is implemented.
